# FASCICULE DE BREVET EUROPEEN

(11) **EP 1 720 711 B1**
(45) Date de publication et mention de la délivrance du brevet: **02.01.2013**
(21) Numéro de dépôt: 05717597.8
(22) Date de dépôt: 10.02.2005
(51) Int. Cl.: B41J 5/04, G02B 27/01, G02F 1/01, G05G 1/02, G06F 3/023, G09F 9/00, H01H 9/18, H04M 1/22

(54) **DISPOSITIF ET PROCEDE D'AFFICHAGE, AFFICHEUR ET CLAVIER LES METTANT EN OEUVRE**
ANZEIGEVERFAHREN UND -VORRICHTUNG UND ANZEIGE UND TASTATUR DAFÜR
DISPLAY METHOD AND DEVICE, AND DISPLAY AND KEYBOARD THEREFOR

(30) Priorité: 11.02.2004 FR 0450240; 06.09.2004 FR 0409424; 06.10.2004 FR 0410516
(43) Date de publication de la demande: 15.11.2006
(73) Titulaire: Luo, David, 69680 Chassieu (FR)
(72) Inventeur: Luo, David, 69680 Chassieu (FR)
(86) Numéro de dépôt international: PCT/FR2005/000297
(87) Numéro de publication internationale: WO 2005/078563

(56) Documents cités:
- DE-A1- 3 235 752

## Description

La présente invention vise un dispositif et un procédé d'affichage, un afficheur et un clavier les mettant en oeuvre. Elle s'applique, en particulier, aux appareils électroniques portables possédant plusieurs modes de fonctionnement, par exemple téléphone et jeu, téléphone et télécommande, radio, téléviseur portable, baladeur, système de positionnement, console de jeu, assistant numérique personnel, terminal d'accès à Internet et aux afficheurs publics, comme des panneaux publicitaires ou de signalisation routière ...

Les appareils électroniques portables sont soumis à une miniaturisation demandée par les utilisateurs et permis par les progrès technologiques. Les claviers de ces appareils ont donc tendance à être miniaturisés, ce qui les rend difficilement utilisables : le pas entre deux touches est du même ordre de grandeur que le diamètre des doigts, si bien que le nombre d'erreurs de saisie est important et/ou le nombre de touches est très réduit et la saisie de chaque symbole impose plusieurs pressions sur le clavier. Par exemple, pour permettre la saisie des 26 lettres avec un clavier comportant une douzaine de touches, plusieurs touches doivent correspondre à au moins trois lettres, sans compter les lettres avec accents.

De plus, le nombre de modes de fonctionnement des appareils électroniques portables augmente : les téléphones portables incorporent des appareils photographiques, des agendas, des gestionnaires de calendrier, des jeux, ...

Le clavier de ces appareils électroniques, dédiés à la fonction principale, par exemple la téléphonie, ne sont pas adaptés aux autres modes de fonctionnement dans lesquels les symboles de clavier auxquels sont habitués les utilisateurs sont différents.

Enfin, il n'est pas possible de présenter, sur chaque touche du clavier, tous les symboles auxquels la touche de clavier devrait correspondre, sous peine de les rendre illisibles.

Dans les panneaux publicitaires ou les affichages publics ou de signalisation routière, lorsque l'on veut pouvoir afficher plusieurs messages, il est nécessaire soit des les juxtaposer, soit de faire défiler ces messages, par exemple en motorisant un moyen de déplacement des supports des messages. Ces systèmes sont coûteux, occupent un espace important ou affichent des messages de petite dimension, nuisible à leur reconnaissance.

Dans DE 32 35 752 A1 est décrit un clavier comme dans la revendication 1, mais avec des filtres qui ne sont pas constitués de supports transparents ou translucides sur lesquels les messages sont imprimés.

La présente invention vise à remédier à ces inconvénients.

A cet effet, la présente invention vise un clavier selon la revendication 1, des exemples particulièrs étant décrits dans les revendications dépendantes, ainsi qu'un dispositif selon la revendication 16 et un procédé d'affichage selon la revendication 17.

Grâce à ces dispositions, pour faire apparaître un message, par exemple un symbole sur l'une des touches de clavier ou un message sur un panneau d'affichage, on module la caractéristique de la source de lumière pour que cette caractéristique corresponde au filtre représentant ledit message ou symbole ou ledit message. En sélectionnant la modulation de lumière émise, on rend visible l'un des symboles ou l'un des messages représentés par l'un des filtres.

De plus, chaque message affiché peut ainsi occuper visuellement, pour l'utilisateur, la majeure partie de la surface d'affichage et, en tout cas, une emprise recouvrant, au moins partiellement, l'emprise des autres messages correspondants aux autres filtres.

Selon des caractéristiques particulières, le moyen de modulation est adapté à faire varier la bande spectrale lumineuse qui parvient aux dits filtres et les dits filtres présentent des bandes spectrales de transparence différentes.

Grâce à ces dispositions, lorsque le moyen de modulation fait varier la bande spectrale des rayons lumineux qui atteignent les filtres, ceux ci prennent des apparences visuelles différentes, ce qui a pour effet de faire apparaître des symboles ou messages différents dans la surface d'affichage, par exemple sur la touche de clavier, à laquelle ces filtres sont associés ou sur le panneau d'affichage comportant ces filtres.

Selon des caractéristiques particulières, la source de lumière comporte une diode électroluminescente dont la bande spectrale d'émission varie en fonction des caractéristiques électriques du signal d'alimentation qui lui est appliqué et le moyen de modulation est adapté à faire varier lesdites caractéristiques électriques.

Grâce à ces dispositions, la construction de la source de lumière, du système optique et du moyen de modulation sont simplifiées.

Selon des caractéristiques particulières, la source de lumière comporte au moins deux transducteurs électro-optiques indépendants placés en parallèle sur un chemin optique de rayons lumineux provenant de la source de lumière et parvenant à la surface d'affichage, le moyen de modulation étant adapté à commander alternativement l'émission de lumière par l'un ou l'autre des transducteurs électro-optiques.

Grâce à ces dispositions, les couleurs des symboles ou messages affichés alternativement, peuvent être identiques, la commutation des transducteurs électro-optiques provocant leurs affichages successifs.

Selon des caractéristiques particulières, le moyen de modulation est adapté à faire varier un axe de polarisation principal des rayons lumineux atteignant les filtres et les filtres présentent des transparences différentes selon les axes de polarisation. Grâce à ces dispositions, les différents symboles ou messages affichés alternativement sur la même surface d'affichage peuvent présenter les mêmes couleurs.

Selon des caractéristiques particulières, la source de lumière comporte une pluralité de transducteurs électro-optiques munis de fibres optiques dont les sorties forment des symboles différents sur la surface d'affichage, le moyen de modulation étant adapté à faire émettre de la lumière par l'un desdits transducteurs électro-optiques.

Grâce à ces dispositions, le clavier peut être très fin.

Selon des caractéristiques particulières, les filtres comportent des composants adaptés à réaliser des interférences constructives ou destructives selon l'angle d'incidence des rayons lumineux et le moyen de modulation est adapté à faire varier l'angle d'incidence des rayons lumineux émis par la source de lumière.

Selon des caractéristiques particulières, les filtres comportent des hologrammes et la source de lumière comporte au moins deux transducteurs électro-optiques adaptés à éclairer lesdits hologrammes avec des angles d'incidence différents pour faire apparaître différents symboles ou messages sur la surface d'affichage, le moyen de modulation étant adapté à faire varier l'angle d'incidence des rayons lumineux émis par la source de lumière.

Selon des caractéristiques particulières, les filtres comportent des composants adaptés à réaliser des réflexions totales ou partielles selon l'angle d'incidence des rayons lumineux et la source de lumière comporte au moins deux transducteurs électro-optiques adaptés à éclairer lesdits filtres avec des angles d'incidence différents pour faire apparaître différents symboles ou messages sur la surface d'affichage, le moyen de modulation étant adapté à faire varier l'angle d'incidence des rayons lumineux émis par la source de lumière.

Selon des caractéristiques particulières, les filtres comportent des composants adaptés à réaliser des transferts de lumière différentes selon l'angle d'incidence des rayons lumineux et la source de lumière comporte au moins deux transducteurs électro-optiques adaptés à éclairer lesdits filtres avec des angles d'incidence différents pour faire apparaître différents symboles ou messages sur la surface d'affichage, le moyen de modulation étant adapté à faire varier l'angle d'incidence des rayons lumineux émis par la source de lumière.

Grâce à chacune de ces dispositions, les différents symboles ou messages affichés alternativement sur la même surface d'affichage peuvent présenter les mêmes couleurs.

Selon des caractéristiques particulières, le chemin optique allant de la source de lumière à la surface d'affichage comporte au moins une fibre optique.

Grâce à ces dispositions, ce chemin optique peut être très fin, par exemple d'une épaisseur inférieure à 10 microns.

Selon des caractéristiques particulières, le chemin optique allant de la source de lumière à la surface d'affichage comporte un composant optique réflecteur.

Selon des caractéristiques particulières, le dispositif d'affichage tel que succinctement exposé ci-dessus comporte un moyen de réception de signaux issus d'un clavier dont les touches comportent des surfaces d'affichage, signaux représentatifs des touches de clavier activées par l'utilisateur, le moyen de réception étant adapté à affecter des symboles différents aux dits signaux, selon la commutation effectuée par le moyen de commutation.

Grâce à ces dispositions, le traitement d'une saisie de symbole sur une touche du clavier tient compte du symbole qui était effectivement affiché sur cette touche.

Selon des caractéristiques particulières, l'un, au moins, desdits filtres est constitué d'une encre déposée avec un marqueur sur un support transparent.

Grâce à ces dispositions, l'utilisateur peut personnaliser les messages affichés par le dispositifs.

La présente invention vise aussi un dispositif électronique selon la revendication 16.

Selon un deuxième aspect, la présente invention vise un procédé d'affichage selon la revendication 17.

Les avantages, buts et caractéristiques de ce procédé et de ce dispositif électronique étant similaires à ceux des dispositifs d'affichage objets du premier aspect tel que succinctement exposés ci-dessus, ils ne sont pas rappelés ici.

D'autres avantages, buts et caractéristiques de la présente invention ressortiront de la description qui va suivre faite, dans un but explicatif et nullement limitatif, en regard des dessins annexés dans lesquels :
- la figure 1 représente, schématiquement, en coupe, un premier selon la revendication 16. exemple de clavier, non-revendiqué, utile à la compréhension de la présente invention ;
- la figure 2, représente, schématiquement, en vue de dessus, le clavier illustré en figure 1 ;
- la figure 3 représente des courbes de transparences de filtres mis en oeuvre dans le clavier illustré en figures 1 et 2 ;
- la figure 4 représente, schématiquement, en coupe, un deuxième exemple de clavier, non-revendiqué, utile à la compréhension de la présente invention ;
- la figure 5, représente, schématiquement, en vue de dessus, le clavier illustré en figure 4 ;
- la figure 6 représente, schématiquement, en coupe, un troisième exemple de clavier, non-revendiqué, utile à la compréhension de la présente invention ;
- la figure 7, représente, schématiquement, en vue de dessus, le clavier illustré en figure 6 ;
- la figure 8 représente, schématiquement, en coupe, un quatrième exemple de clavier, non-revendiqué, utile à la compréhension de la présente invention ;
- la figure 9, représente, schématiquement, en vue de dessus, le clavier illustré en figure 8 ;
- la figure 10 représente, schématiquement, en coupe, un cinquième exemple de clavier, non-revendiqué, utile à la compréhension de la présente invention ;
- la figure 11, représente, schématiquement, en vue de dessus, le clavier illustré en figure 10 ;
- la figure 12 représente, schématiquement, en coupe, un sixième exemple de clavier, non-revendiqué, utile à la compréhension de la présente invention ;
- la figure 13 représente des courbes de transparences de filtres mis en oeuvre dans le clavier illustré en figures 12 ;
- la figure 14 représente, schématiquement, en coupe, un septième exemple de clavier, non-revendiqué, utile à la compréhension de la présente invention ;
- la figure 15, représente, schématiquement, en vue de dessus, le clavier illustré en figure 14 ;
- la figure 16 représente, schématiquement, en coupe, un huitième exemple de clavier, non-revendiqué, utile à la compréhension de la présente invention ;
- la figure 17, représente, schématiquement, en vue de dessus, le clavier illustré en figure 16 ;
- la figure. 18 représente des courbes de transparences de filtres mis en oeuvre dans le huitième exemple de clavier illustré en figures 16 et 17 ;
- la figure 19 représente, schématiquement, un exemple de messages, ici des symboles, portés par des touches du huitième exemple de clavier illustré en figures 16 à 18 ;
- la figure 20 représente, schématiquement, en coupe, un neuvième exemple de clavier, non-revendiqué, utile à la compréhension de la présente invention ;
- la figure 21 représente des courbes de transparence de filtres mis en oeuvre dans le neuvième exemple de clavier illustré en figure 20 ;
- la figure 22 représente, schématiquement, en coupe, un dixième exemple de clavier, non-revendiqué, utile à la compréhension de la présente invention ;
- la figure 23, représente, schématiquement, en vue de dessus, le clavier illustré en figure 22 ;
- la figure 24 représente, schématiquement, en coupe, un onzième exemple de clavier, non-revendiqué, utile à la compréhension de la présente invention ;
- la figure 25, représente, schématiquement, en vue de dessus, le clavier illustré en figure 24 ;
- la figure 26 représente, schématiquement, un circuit électronique associé à un clavier tel qu'illustré dans l'une des figures 1 à 25 ;
- les figures 27 à 30 représentent des affichages sur clavier adaptés à différentes mises en oeuvre de la présente invention ;
- la figure 31 représente, schématiquement, un afficheur mettant en oeuvre un fonctionnement similaire à celui décrit en regard des figures 12 et 13 pour afficher différents messages et
- les figures 32 à 35 représentent, schématiquement, en coupe, une surface d'affichage d'un afficheur mettant en oeuvre un fonctionnement similaire à celui décrit en regard des figures 20 et 21 pour afficher différents messages.

Dans toute la description, on décrit des sources de lumière comportant une ou plusieurs diodes électroluminescentes. Cependant, la présente invention ne se limite pas à ce type de transducteur électro-optique, mais couvre tous les types de sources de lumières, par exemple à ampoule à incandescence ou à ampoule dites "fluo".

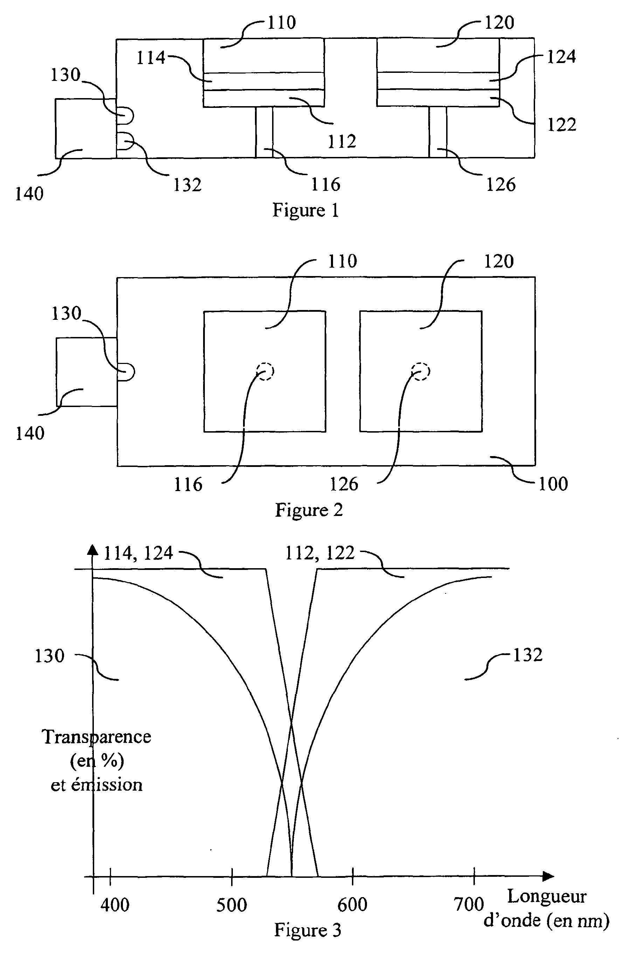

Dans les figures 1 à 30, on représente des claviers comportant une pluralité de touches. La présente invention ne se limite pas à ce type de clavier mais s'étend, bien au contraire, aux claviers avec une seule touche, aux touches, boutons et contacteurs qui mettent en oeuvre les caractéristiques de la présente invention.

Dans toute la description, on décrit, à titre d'exemple, des contacteurs électriques réalisant un contact électrique lorsque l'utilisateur appui sur une touche de clavier liée audit contacteur. Cependant, la présente invention peut être mise en oeuvre avec tous les types de contacteurs, par exemple, les contacteurs mettant en oeuvre des caoutchoucs conducteurs, des contacteurs mécaniques, des membranes tactiles ou non-tactiles, des contacteurs mettant en oeuvre des commutations optiques, des variations d'impédance, par exemple de capacitance, des contacteurs à effet Hall, Reed, PushGate et Piezoélectriques.

Dans la description, on décrit de nombreux filtres possédant au moins une partie transparente. Cependant pour compenser les différences d'intensités lumineuses qui pourraient apparaître entre ces parties transparentes et les parties filtrantes, pour les rayons lumineux qui n'y sont pas filtrés, les parties dites transparentes, peuvent avoir un coefficient de transparence inférieure à 100 %.

Dans le premier mode de réalisation, illustré par les figures 1 à 3, on utilise des filtres chromatiques formant, en positif ou en négatif, différents symboles et, pour faire apparaître un symbole donné, on module la bande spectrale d'émission d'une source de lumière.

On observe, en figures 1 et 2, un clavier 100 comportant des touches 110 et 120, munies de filtres, respectivement 112 et 114, touche 110, et 122 et 124, touche 120, et de contacteurs électriques, respectivement 116 et 126. Une source de lumière est constituée de deux diodes électroluminescentes 130 et 132 commandées par un moyen de modulation 140.

Les contacteurs électriques 116 et 126 effectuent un contact électrique entre leurs bornes lorsque l'on presse ou appuie sur les touches 110 et 120, respectivement. Le moyen de modulation 140 est un commutateur électrique qui alimente l'une ou l'autre des diodes électroluminescentes 130 et 132.

Les diodes électroluminescentes 130 et 132 émettent dans des bandes spectrales différentes, préférentiellement disjointes. Par exemple, la diode électroluminescente 130 émet des rayons lumineux dont les longueurs se trouvent entre 400 et 550 nanomètres et la diode électroluminescente 132 émet des rayons lumineux dont les longueurs se trouvent entre 550 et 700 nanomètres.

Les filtres 112 et 114, d'une part et 122 et 124, d'autre part, sont superposés, c'est-à-dire qu'ils se trouvent successivement placés sur le chemin optique des rayons lumineux issus des sources de lumière 130 et 132. Sur les filtres 112 et 114 sont formés des symboles différents, par exemple "1" et ">", les filtres 112 et 114 étant respectivement transparents en dehors des formes de ces symboles et possédant, dans la forme des symboles, des spectres d'absorption correspondant respectivement sensiblement aux spectres d'émission des diodes électroluminescentes 130 et 132, comme indiqué en regard de la figure 3.

Sur les filtres 122 et 124 sont formés des symboles différents, par exemple "2" et "<", les filtres 122 et 124 étant respectivement transparents dans les formes de ces symboles et possédant, en dehors de ces symboles, des spectres d'absorption correspondant respectivement sensiblement aux spectres d'émission des diodes électroluminescentes 130 et 132, comme indiqué en regard de la figure 3.

Lorsque le moyen de modulation 140 commande l'allumage de la diode électroluminescente 130 et l'extinction de la diode électroluminescente 132, la source de lumière émet des rayons lumineux dont les longueurs d'onde se trouvent entre 400 et 550 nanomètres. Les rayons lumineux émis par la source de lumière traversent le filtre 112 en dehors du symbole représenté par ce filtre et sont absorbés dans ce symbole puisque son spectre d'absorption correspond au spectre d'émission de la diode électroluminescente 130. Puis, les rayons restants traversent le filtre 114 aussi bien dans la forme du symbole porté par le filtre 114 qu'en dehors de ce symbole puisque ce filtre est transparent dans le spectre d'émission de la diode électroluminescente 130. Pour la touche 110, le symbole visible est donc le symbole porté par le filtre 112, ici "1", qui apparaît en noir sur fond bleu.

De la même manière, pour la touche 120, le symbole visible est le symbole porté par le filtre 122, ici "2", qui apparaît en bleu sur fond noir.

Lorsque le moyen de modulation 140 commande l'allumage de la diode électroluminescente 132 et l'extinction de la diode électroluminescente 130, la source de lumière émet des rayons lumineux dont les longueurs d'onde se trouvent entre 550 et 700 nanomètres. Les rayons lumineux émis par la source de lumière traversent le filtre 112 aussi bien en dehors du symbole représenté par ce filtre que dans ce symbole puisqu'il est transparent aux rayons du spectre d'émission de la diode électroluminescente 132. Puis, les rayons sont absorbés dans la forme du symbole porté par le filtre 114 et traverse ce filtre en dehors de la forme de ce symbole puisque le spectre d'absorption du filtre 114 correspond au spectre d'émission de la diode électroluminescente 132. Pour la touche 110, le symbole visible est donc le symbole porté par le filtre 114, ici ">", qui apparaît en noir sur fond orangé.

De la même manière, pour la touche 120, le symbole visible est le symbole porté par le filtre 124, ici "<", qui apparaît en orangé sur fond noir.

Ainsi, grâce à la mise en oeuvre de la présente invention, par la modulation d'une caractéristique physique de la lumière émise par la source de lumière, ici la longueur d'onde des rayons émis, on fait apparaître, sur chaque touche du clavier 100, soit un symbole, soit un autre.

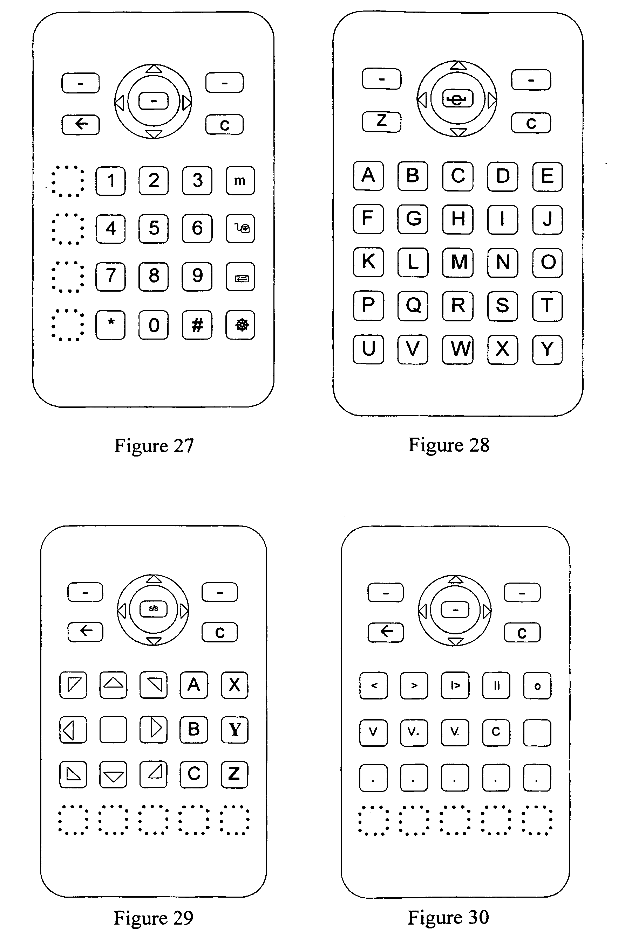

Par exemple, la mise en oeuvre de la présente invention permet que les symboles ">" et "<" soient affichés lorsque le clavier sert à jouer, pour indiquer des directions de déplacement nécessaires pour la mise en oeuvre d'un jeu, et que les symboles "1" et "2" soient affichés lorsque le clavier sert à saisir des chiffres ou des numéros, pour effectuer un calcul ou appeler un numéro de téléphone. D'autres exemples d'applications sont exposés en regard des figures 27 à 30.

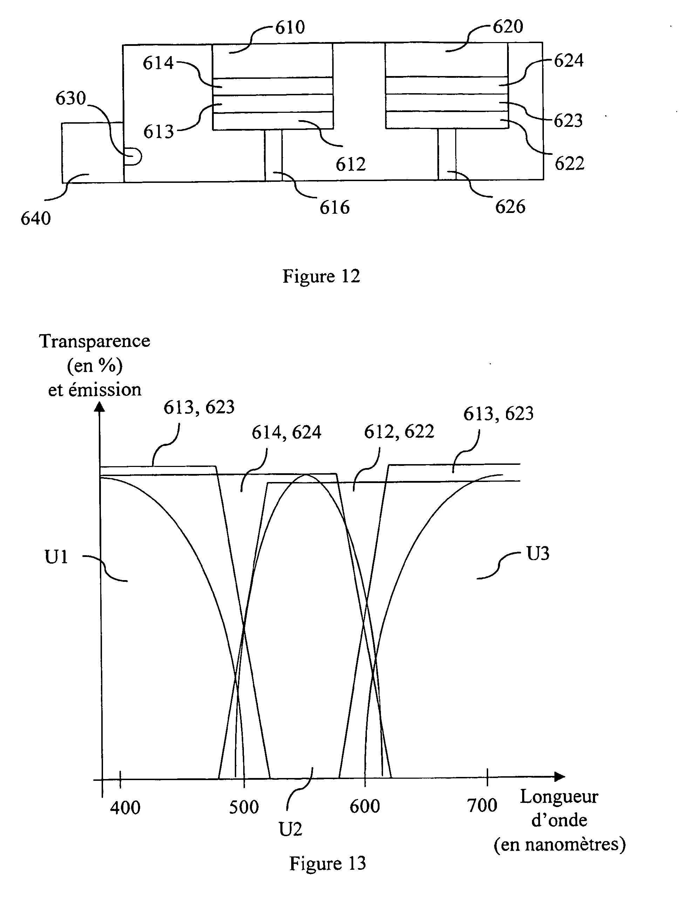

En variante du premier exemple, illustré en figures 1 à 3, la source de lumière comporte une diode électroluminescente dont le spectre de longueur d'ondes d'émission dépend d'au moins une caractéristique électrique du signal qui lui est appliqué, par exemple la tension (voir figure 12).

En variante du premier exemple, illustré en figures 1 à 3, la source de lumière comporte deux diodes électroluminescentes émettant dans le même spectre visible, associées, chacune, à un filtre chromatique.

En variante du premier exemple, illustré en figures 1 à 3, la source de lumière comporte une diode électroluminescente suivie d'un filtre polariseur dichroïque placé optiquement à la suite d'un écran à cristaux liquides à une seule cellule et ne comportant qu'un filtre polarisant en entrée, la commande de cet écran à cristaux liquides permettant de faire varier la polarisation de sortie de l'écran à cristaux liquides et, partant, de la couleur des rayons lumineux issus de la source de lumière.

On observe ici que le nombre de filtres pouvant être superposés et le nombre de diodes électroluminescentes correspondantes ne sont pas limités à deux mais peuvent atteindre le nombre de bandes spectrales différentes que la source de lumière et les filtres chromatiques peuvent avoir, par exemple dix, si des bandes spectrales disjointes couvrent chacune une largeur de spectre de trente nanomètres et que les filtres possèdent un spectre d'absorption correspondant aux spectres d'émission possibles de la source de lumière.

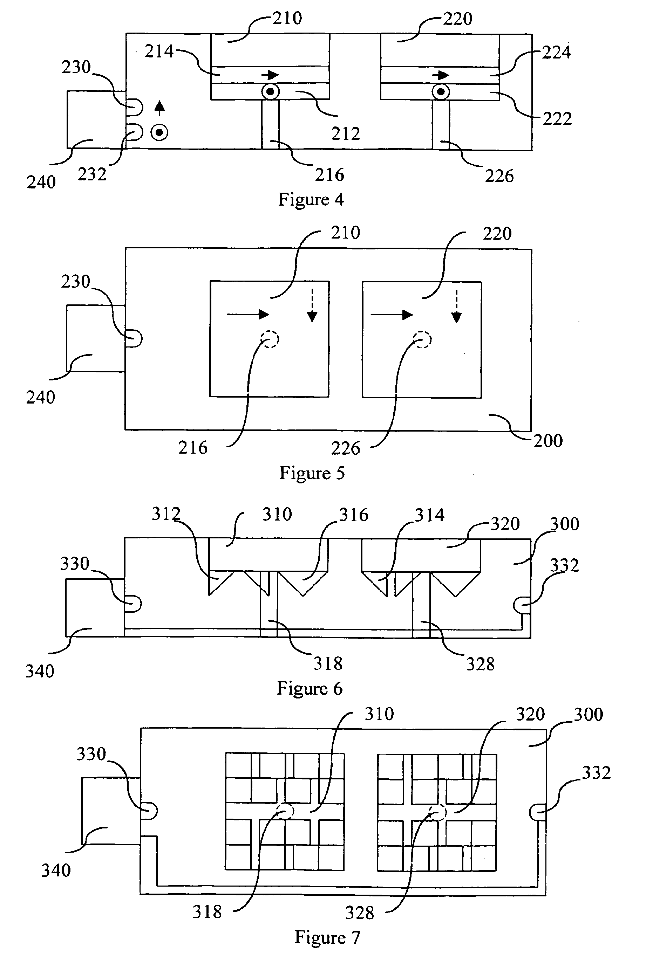

Dans le deuxième exemple, illustré par les figures 4 et 5, on utilise des filtres polariseurs sur lesquels sont formés différents symboles et, pour faire apparaître un symbole donné, on module la direction de polarisation principale d'émission d'une source de lumière.

On observe que pour former des symboles sur filtres polarisants, on peut prendre des filtres polariseurs et détruire localement leur capacité de polarisation par chauffage local. Alternativement, on peut découper un film polarisant et coller la forme que l'on souhaite sur une touche de clavier.

On observe, en figures 4 et 5, un clavier 200 comportant des touches 210 et 220, munies de filtres, respectivement 212 et 214, touche 210, et 222 et 224, touche 220 et de contacteurs électriques, respectivement 216 et 226. Une source de lumière est constituée de deux diodes électroluminescentes 230 et 232 commandées par un moyen de modulation 240.

Les contacteurs électriques 216 et 226 effectuent un contact électrique entre leurs bornes lorsque l'on presse ou appuie sur les touches 210 et 220, respectivement. Le moyen de modulation 240 est un commutateur électrique qui alimente l'une ou l'autre des diodes électroluminescentes 230 et 232.

Les diodes électroluminescentes 230 et 232 émettent des rayons lumineux visibles possédant des axes de polarisation perpendiculaires, entre les rayons émis par les deux diodes. Par exemple, la diode électroluminescente 230 émet des rayons lumineux dont l'axe de polarisation est parallèle au plan de coupe utilisé en figure 4 et la diode électroluminescente 232 émet des rayons lumineux dont l'axe de polarisation est perpendiculaire à ce plan de coupe. A cet effet, par exemple, les diodes 230 et 232 émettent dans tout le spectre visible et sont associées à ou incorporent des filtres polariseurs (non représentés).

Les filtres 212 et 214, d'une part, et les filtres 222 et 224, d'autre part sont superposés, c'est-à-dire qu'ils se trouvent successivement placés sur le chemin optique des rayons lumineux issus des sources de lumière 230 et 232. Sur les filtres 212 et 214 sont formés des symboles différents, par exemple "1" et ">", les filtres 212 et 214 étant respectivement transparents en dehors des formes de ces symboles et possédant, dans la forme des symboles, des axes de polarisation correspondant respectivement aux axes de polarisation des diodes électroluminescentes 230 et 232.

Sur les filtres 222 et 224 sont formés des symboles différents, par exemple "2" et "<", les filtres 222 et 224 étant respectivement transparents dans les formes de ces symboles et possédant, en dehors de ces symboles, des axes de polarisation correspondant respectivement aux axes de polarisation des diodes électroluminescentes 230 et 232.

Lorsque le moyen de modulation 240 commande l'allumage de la diode électroluminescente 230 et l'extinction de la diode électroluminescente 232, la source de lumière émet des rayons lumineux dont l'axe de polarisation est parallèle au plan de coupe utilisé en figure 4. Les rayons lumineux émis par la source de lumière traversent donc le filtre 212 aussi bien en dehors du symbole représenté par ce filtre que dans ce symbole. Puis, les rayons lumineux traversent le filtre 214 en dehors de la forme du symbole porté par le filtre 214 et sont arrêtés dans la forme du symbole. Pour la touche 210, le symbole visible est donc le symbole porté par le filtre 214, ici ">", qui apparaît en noir sur un fond dont la couleur correspond au spectre d'émission de la diode électroluminescente 230, par exemple sur fond blanc.

De même, pour la touche 220, le symbole visible est celui qui est porté par le filtre 224, ici "<", qui apparaît lumineux sur fond noir, la couleur du symbole correspondant au spectre d'émission de la diode électroluminescente 230, par exemple blanche.

Inversement, lorsque le moyen de modulation 240 commande l'allumage de la diode électroluminescente 232 et l'extinction de la diode électroluminescente 230, les symboles qui apparaissent visibles sont les symboles portés par les filtres 212 et 222, soit "1" et "2", respectivement.

Ainsi, grâce à la mise en oeuvre de la présente invention, par la modulation d'une caractéristique physique de la lumière émise par la source de lumière, ici la polarisation des rayons émis, on fait apparaître, sur chaque touche du clavier 200, soit un symbole, soit un autre.

exemple En variante du deuxième exemple, illustré en figures 4 et 5, la source de lumière comporte une diode électroluminescente suivie d'un écran à cristaux liquides à une seule cellule et ne comportant qu'un filtre polarisant en entrée, la commande de cet écran à cristaux liquides permettant de faire varier la polarisation de sortie de l'écran à cristaux liquides.

Dans le troisième exemple, illustré par les figures 6 et 7, on utilise des dioptres qui forment des éléments d'image de différents symboles et, pour faire apparaître un symbole donné, on module la direction de provenance des rayons lumineux de la source de lumière.

On observe, en figures 6 et 7, un clavier 300 comportant des touches 310 et 320, munies d'ensembles de dioptres 312, 314 et 316, de formes différentes et de contacteurs électriques, respectivement 318 et 328. Une source de lumière est constituée de deux diodes électroluminescentes 330 et 332 commandées par un moyen de modulation 340.

On observe que les dioptres représentés dans ces figures ne sont pas à la même échelle que les autres éléments, en particulier les touches de clavier.

Les contacteurs électriques 318 et 328 effectuent un contact électrique entre leurs bornes lorsque l'on presse ou appuie sur les touches 310 et 320, respectivement. Le moyen de modulation 340 est un commutateur électrique qui alimente l'une ou l'autre des diodes électroluminescentes 330 et 332.

Les diodes électroluminescentes 330 et 332 émettent des rayons lumineux visibles en des points opposés du clavier 300. Par exemple, la diode électroluminescente 330 émet des rayons lumineux à partir de la gauche du clavier 300 et la diode électroluminescente 332 émet des rayons lumineux à partir de la droite du clavier 300.

Les dioptres 312 sont adaptés à réfléchir, vers la touche à laquelle ils sont associés, les seuls rayons lumineux provenant de la diode électroluminescente 330. Par exemple, les dioptres 312 présentent, en coupe, une forme en prisme dont une face verticale est orientée du côté de la diode électroluminescente 330 et une face oblique, faisant un angle de 45 degrés avec les deux autres faces du prisme, est orientée vers la diode électroluminescente 332.

Les dioptres 314 sont adaptés à réfléchir, vers la touche à laquelle ils sont associés, les seuls rayons lumineux provenant de la diode électroluminescente 332. Par exemple, les dioptres 314 présentent, en coupe, une forme en prisme dont une face verticale est orientée du côté de la diode électroluminescente 332 et une face oblique, faisant un angle de 45 degrés avec les deux autres faces du prisme, est orientée vers la diode électroluminescente 330.

Les dioptres 316 sont adaptés à réfléchir, vers la touche à laquelle ils sont associés, les rayons lumineux provenant de chacune des diodes électroluminescentes 330 et 332. Par exemple, les dioptres 316 présentent, en coupe, une forme en prisme dont deux faces symétriques obliques, font, chacune, un angle de 45 degrés avec une face du prisme parallèle à la surface de la touche.

Lorsqu'un élément d'image ne fait partie d'aucun des symboles susceptibles d'être affichés par une touche, cet élément d'image ne possède pas de dioptre.

Lorsqu'un élément d'image ne fait partie que du symbole à faire apparaître avec la diode électroluminescente 330, cet élément d'image possède un dioptre 312. Lorsqu'un élément d'image ne fait partie que du symbole à faire apparaître avec la diode électroluminescente 332, cet élément d'image possède un dioptre 314. Lorsqu'un élément d'image fait partie des deux symboles à faire apparaître avec les diodes électroluminescentes 330 et 332, cet élément d'image possède un dioptre 316.

Lorsque le moyen de modulation 340 commande l'allumage de la diode électroluminescente 330 et l'extinction de la diode électroluminescente 332, les éléments d'images qui font partie d'un premier symbole apparaissent lumineux. Lorsque le moyen de modulation 340 commande l'allumage de la diode électroluminescente 332 et l'extinction de la diode électroluminescente 330, les éléments d'images qui font partie d'un deuxième symbole apparaissent lumineux.

Ainsi, grâce à la mise en oeuvre de la présente invention, par la modulation d'une caractéristique physique de la lumière émise par la source de lumière, ici la direction et/ou le sens des rayons émis, on fait apparaître, sur chaque touche du clavier 300, soit un symbole, soit un autre.

En variante du troisième exemple, on remplace les ensembles de dioptres par des réseaux de rayures orientées sur une surface métallique éclairée par le côté ou se trouve la touche, les rayures orientées provocant des réflexions locales, pour les points d'image que l'on souhaite faire apparaître. Par exemple, les diodes électroluminescentes sont positionnées à 90 degrés par rapport au centre du clavier et les rayures orientées sont orientées, localement, perpendiculairement à la direction des rayons lumineux provenant de la diode électroluminescente qui doit faire apparaître un élément d'image.

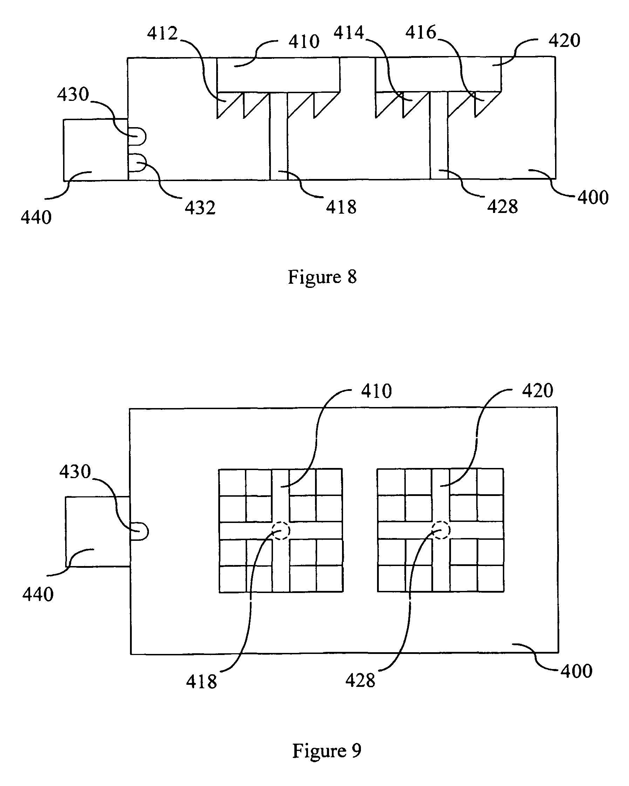

Dans le quatrième exemple, illustré par les figures 8 et 9, on utilise des traitements multicouches qui, selon la longueur d'onde de la lumière incidente, sont soit très réfléchissants, soit très peu réfléchissants et qui sont appliqués à des éléments d'image de différents symboles. Pour faire apparaître un symbole donné, on module la longueur d'onde des rayons lumineux émis par la source de lumière.

On observe, en figures 8 et 9, un clavier 400 comportant des touches 410 et 420, munies de prismes 412, 414 et 416, de formes différentes et de contacteurs électriques, respectivement 418 et 428. Une source de lumière est constituée de deux diodes électroluminescentes 430 et 432 commandées par un moyen de modulation 440.

On observe que les dioptres représentés dans ces figures ne sont pas à la même échelle que les autres éléments, en particulier les touches de clavier.

Les contacteurs électriques 418 et 428 effectuent un contact électrique entre leurs bornes lorsque l'on presse ou appuie sur les touches 410 et 420, respectivement. Le moyen de modulation 440 est un commutateur électrique qui alimente l'une ou l'autre des diodes électroluminescentes 430 et 432.

Les diodes électroluminescentes 430 et 432 émettent des rayons lumineux visibles de longueurs d'onde différentes, par exemple centrées sur 440 et sur 660 nanomètres, respectivement.

Les prismes 412 sont adaptés à provoquer des interférence constructives et destructives pour réfléchir, vers la touche à laquelle ils sont associés, les seuls rayons lumineux provenant de la diode électroluminescente 430. A cet effet, les prismes 412 présentent, en coupe, une forme en prisme dont une face verticale est orientée du côté des diodes électroluminescentes et une face oblique, faisant un angle de 45 degrés avec les deux autres faces du prisme, est traitée avec un traitement multicouche adapté à réfléchir les rayons lumineux dont la longueur d'onde est autour de 440 nanomètres et à ne pas réfléchir les rayons lumineux dont la longueur d'onde est autour de 660 nanomètres.

Les prismes 414 sont adaptés à provoquer des interférence constructives et destructives pour réfléchir, vers la touche à laquelle ils sont associés, les seuls rayons lumineux provenant de la diode électroluminescente 432. A cet effet, les prismes 414 présentent, en coupe, une forme en prisme dont une face verticale est orientée du côté des diodes électroluminescentes et une face oblique, faisant un angle de 45 degrés avec les deux autres faces du prisme, est traitée avec un traitement multicouche adapté à réfléchir les rayons lumineux dont la longueur d'onde est autour de 660 nanomètres et à ne pas réfléchir les rayons lumineux dont la longueur d'onde est autour de 440 nanomètres.

Les prismes 416 sont adaptés à provoquer des interférence constructives pour réfléchir, vers la touche à laquelle ils sont associés, les rayons lumineux provenant des deux diodes électroluminescentes 430 et 432. A cet effet, les prismes 414 présentent, en coupe, une forme en prisme dont une face verticale est orientée du côté des diodes électroluminescentes et une face oblique, faisant un angle de 45 degrés avec les deux autres faces du prisme, est traitée avec un traitement métallique formant miroir partiellement réfléchissant.

Lorsqu'un élément d'image ne fait partie d'aucun des symboles susceptibles d'être affichés par une touche, cet élément d'image ne possède pas de prisme.

Lorsqu'un élément d'image ne fait partie que du symbole à faire apparaître avec la diode électroluminescente 430, cet élément d'image possède un prisme 412. Lorsqu'un élément d'image ne fait partie que du symbole à faire apparaître avec la diode électroluminescente 432, cet élément d'image possède un prisme 414. Lorsqu'un élément d'image fait partie des deux symboles à faire apparaître avec les diodes électroluminescentes 430 et 432, cet élément d'image possède un prisme 416.

Lorsque le moyen de modulation 440 commande l'allumage de la diode électroluminescente 430 et l'extinction de la diode électroluminescente 432, les éléments d'images qui font partie d'un premier symbole apparaissent lumineux. Lorsque le moyen de modulation 440 commande l'allumage de la diode électroluminescente 432 et l'extinction de la diode électroluminescente 430, les éléments d'images qui font partie d'un deuxième symbole apparaissent lumineux.

Ainsi, grâce à la mise en oeuvre de la présente invention, par la modulation d'une caractéristique physique de la lumière émise par la source de lumière, ici la longueur d'onde des rayons émis, on fait apparaître, sur chaque touche du clavier 400, soit un symbole, soit un autre.

En variante du quatrième mode de réalisation, illustré en figures 8 et 9, la source de lumière comporte une diode électroluminescente dont le spectre de longueur d'ondes d'émission dépend d'au moins une caractéristique électrique du signal qui lui est appliqué, par exemple la tension.

En variante du quatrième exemple, illustré en figures 8 et 9, la source de lumière comporte deux diodes électroluminescentes émettant dans le même spectre visible, associées, chacune, à un filtre chromatique.

En variante du quatrième exemple, illustré en figure 8 et 9, les traitements multicouches provoquent la réflexion de plusieurs bandes spectrales réparties sur le spectre visible et correspondant à des bandes spectrales émises par la source de lumière, ce qui permet l'affichage de symboles relativement moins colorés et contrastés que les longueurs d'ondes de 440 et 660 nanomètres.

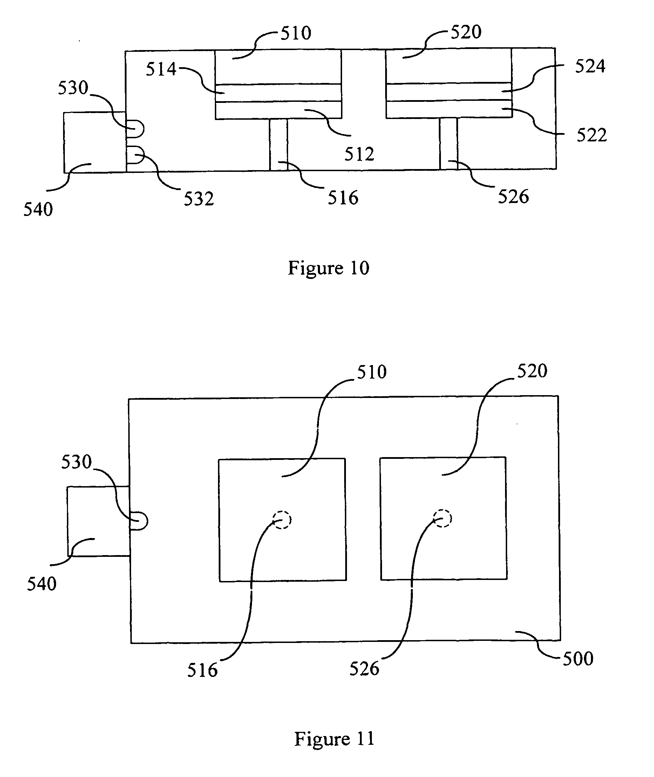

Dans le cinquième exemple, illustré par les figures 10 à 11, on utilise des composés photoluminescents formant différents symboles et, pour faire apparaître un symbole donné, on module la bande spectrale d'émission d'une source de lumière.

On rappelle ici qu'un composé photoluminescent est un composé chimique qui présente la particularité d'émettre de la lumière dans un premier spectre (ici un spectre visible) lorsqu'il est éclairé par de la lumière dans un deuxième spectre (ici un spectre de lumière infrarouge et/ou visible).

On observe, en figures 10 et 11, un clavier 500 comportant des touches 510 et 520, munies de filtres, respectivement 512 et 514, touche 510, et 522 et 524, touche 520 et de contacteurs électriques, respectivement 516 et 526. Une source de lumière est constituée de deux diodes électroluminescentes 530 et 532 commandées par un moyen de modulation 540.

Les contacteurs électriques 516 et 526 effectuent un contact électrique entre leurs bornes lorsque l'on presse ou appuie sur les touches 510 et 520, respectivement. Le moyen de modulation 540 est un commutateur électrique qui alimente l'une ou l'autre des diodes électroluminescentes 530 et 532.

Les diodes électroluminescentes 530 et 532 émettent dans des bandes spectrales, préférentiellement disjointes, correspondant à des bandes spectrales de réception de deux composés photoluminescents mis en oeuvre pour la formation respectivement des filtres 512 et 522, d'une part et des filtres 514 et 524, d'autre part.

Les filtres 512 et 514, d'une part, et 522 et 524, d'autre part, sont superposés, c'est-à-dire qu'ils se trouvent successivement placés sur le chemin optique des rayons lumineux issus des sources de lumière 530 et 532. Sur les filtres 512 et 514 sont formés des symboles différents, par exemple "1" et ">", les filtres 512 et 514 étant respectivement transparents aux longueurs d'ondes d'excitation du composé photoluminescent porté par le filtre 514 et aux longueurs d'ondes émises par le composé photoluminescent porté par le filtre 512.

Sur les filtres 522 et 524 sont formés des symboles différents, par exemple "2" et "<", les filtres 522 et 524 étant respectivement transparents aux longueurs d'ondes d'excitation du composé photoluminescent porté par le filtre 524 et aux longueurs d'ondes émises par le composé photoluminescent porté par le filtre 522.

Lorsque le moyen de modulation 540 commande l'allumage de la diode électroluminescente 530 et l'extinction de la diode électroluminescente 532, la source de lumière émet des rayons lumineux qui excitent le composé photoluminescent porté par les filtres 512 et 522, provoquant l'apparition des symboles formés avec ce composé, ici "1" et "2".

Lorsque le moyen de modulation 540 commande l'allumage de la diode électroluminescente 532 et l'extinction de la diode électroluminescente 530, la source de lumière émet des rayons lumineux qui excitent le composé photoluminescent porté par les filtres 514 et 524, provoquant l'apparition des symboles formés avec ce composé, ici ">" et "<".

Ainsi, grâce à la mise en oeuvre de la présente invention, par la modulation d'une caractéristique physique de la lumière émise par la source de lumière, ici la longueur d'onde des rayons émis, on fait apparaître, sur chaque touche du clavier 500, soit un symbole, soit un autre.

En variante du cinquième exemple, illustré en figures 10 et 11, la source de lumière comporte une diode électroluminescente dont le spectre de longueur d'ondes d'émission dépend d'au moins une caractéristique électrique du signal qui lui est appliqué, par exemple la tension.

En variante du cinquième exemple, illustré en figures 10 et 11, la source de lumière comporte deux diodes électroluminescentes émettant dans le même spectre visible, associées, chacune, à un filtre chromatique.

On observe ici que le nombre de filtres pouvant être superposés et le nombre de diodes électroluminescentes correspondantes ne sont pas limités à deux mais peuvent atteindre le nombre de bandes spectrales différentes que la source de lumière peut émettre et que les composés photoluminescents peuvent avoir comme longueurs d'onde d'excitation différentes.

Dans le sixième exemple, illustré par les figures 12 et 13 on utilise des filtres chromatiques formant, en positif ou en négatif, différents symboles et, pour faire apparaître un symbole donné, on module la bande spectrale d'émission d'une source de lumière.

On observe, en figure 12, un clavier 600 comportant des touches 610 et 620, munies de filtres, respectivement 612, 613 et 614, touche 610, et 622, 62.3 et 624, touche 620, et de contacteurs électriques, respectivement 616 et 626. Une source de lumière est constituée d'une diode électroluminescente 630 dont le spectre d'émission est commandé par un moyen de modulation 640, par exemple par commande de la tension d'alimentation de la diode électroluminescente 630.

Les contacteurs électriques 616 et 626 effectuent un contact électrique entre leurs bornes lorsque l'on presse ou appuie sur les touches 610 et 620, respectivement. Le moyen de modulation 640 est un modulateur de tension d'alimentation de la diode électroluminescente 630.

La diode électroluminescente 630 est adaptée à émettre de la lumière dans trois bandes spectrales différentes, préférentiellement disjointes, en fonction de la tension qui lui est appliqué. Par exemple, la diode électroluminescente 630 émet des rayons lumineux dont les longueurs se trouvent entre 400 et 500 nanomètres, lorsqu'elle est alimentée avec une première tension U1, des rayons lumineux dont les longueurs se trouvent entre 500 et 600 nanomètres, lorsqu'elle est alimentée avec une deuxième tension U2 et des rayons lumineux dont les longueurs se trouvent entre 600 et 700 nanomètres, lorsqu'elle est alimentée avec une troisième tension U3.

Les filtres 612 à 614, d'une part, et 622 à 624, d'autre part, sont superposés, c'est-à-dire qu'ils se trouvent successivement placés sur le chemin optique des rayons lumineux issus de la diode électroluminescente 630. Sur les filtres 612, 613 et 614 sont formés des symboles différents, par exemple "1", ">" et "€", respectivement, les filtres 612 à 614 étant respectivement transparents en dehors des formes de ces symboles et possédant, dans la forme des symboles, des spectres d'absorption correspondant respectivement sensiblement aux trois spectres d'émission de la diode - électroluminescente 630 indiqués ci-dessus comme illustré en regard de la-figure 13.

Sur les filtres 622, 623 et 624 sont formés des symboles différents, par exemple "2", "<" et "$", les filtres 622 à 624 étant respectivement transparents dans les formes de ces symboles et possédant, en dehors de ces symboles, des spectres d'absorption correspondant respectivement sensiblement aux spectres d'émission de la diode électroluminescente 630 indiqué ci-dessus, comme illustré en regard de la figure 13.

Lorsque le moyen de modulation 640 alimente la diode électroluminescente 630 avec la tension U1, la source de lumière émet des rayons lumineux dont les longueurs d'onde se trouvent entre 400 et 500 nanomètres. Les rayons lumineux émis par la source de lumière traversent le filtre 612 en dehors du symbole représenté par ce filtre et sont absorbés dans ce symbole puisque son spectre d'absorption correspond au spectre d'émission de la diode électroluminescente 630. Puis, les rayons restants traversent les filtres 613 et 614 aussi bien dans la forme du symbole porté par ces filtres qu'en dehors de ces symboles puisque ces filtres sont transparents dans le spectre d'émission de la diode électroluminescente 630. Pour la touche 610, le symbole visible est donc le symbole porté par le filtre 612, ici "1", qui apparaît en noir sur fond bleu-violet.

De la même manière, pour la touche 620, le symbole visible est le symbole porté par le filtre 622, ici "2", qui apparaît en bleu-violet sur fond noir.

Lorsque le moyen de modulation 640 alimente la diode électroluminescente 630 avec la tension U2, la source de lumière émet des rayons lumineux dont les longueurs d'onde se trouvent entre 500 et 600 nanomètres.

Les rayons lumineux traversent le filtre 612 aussi bien dans la forme du symbole porté par ce filtre qu'en dehors de ce symbole puisque ce filtre est transparent dans le spectre d'émission de la diode électroluminescente 630.

Les rayons lumineux traversent ensuite le filtre 613 en dehors du symbole représenté par ce filtre et sont absorbés dans ce symbole puisque son spectre d'absorption correspond au spectre d'émission de la diode électroluminescente 630. Puis, les rayons restants traversent le filtre 614 aussi bien dans la forme du symbole porté par ce filtre qu'en dehors de ce symbole puisque ce filtre est transparent dans le spectre d'émission de la diode électroluminescente 630. Pour la touche 610, le symbole visible est donc le symbole porté par le filtre 613, ici ">", qui apparaît en noir sur fond vert.

De la même manière, pour la touche 620, le symbole visible est le symbole porté par le filtre 623, ici "<", qui apparaît en vert sur fond noir.

Lorsque le moyen de modulation 640 alimente la diode électroluminescente 630 avec la tension U3, la source de lumière émet des rayons lumineux dont les longueurs d'onde se trouvent entre 600 et 700 nanomètres.

Les rayons lumineux émis par la source de lumière traversent les filtres 612 et 613 aussi bien dans la forme du symbole porté par ces filtres qu'en dehors de ces symboles puisque ces filtres sont transparents dans le spectre d'émission de la diode électroluminescente 630.

Les rayons lumineux traversent ensuite le filtre 614 en dehors du symbole représenté par ce filtre et sont absorbés dans ce symbole puisque son spectre d'absorption correspond au spectre d'émission de la diode électroluminescente 630.

Pour la touche 610, le symbole visible est donc le symbole porté par le filtre 614, ici "€", qui apparaît en noir sur fond rouge-orangé.

De la même manière, pour la touche 620, le symbole visible est le symbole porté par le filtre 624, ici "$", qui apparaît en rouge-orangé sur fond noir.

Ainsi, grâce à la mise en oeuvre de la présente invention, par la modulation d'une caractéristique physique de la lumière émise par la source de lumière, ici la longueur d'onde des rayons émis, on fait apparaître, sur chaque touche du clavier 600, soit un symbole, soit un autre.

En variante du sixième exemple, illustré en figures 12 et 13, la source de lumière exemple comporte trois diodes électroluminescentes émettant dans trois spectres visibles ou sont associées, chacune, à un filtre chromatique.

On observe ici que le nombre de filtres pouvant être superposés et le nombre de diodes électroluminescentes correspondantes ne sont pas limités à deux mais peuvent atteindre le nombre de bandes spectrales différentes que la source de lumière et les filtres chromatiques peuvent avoir, par exemple dix, si des bandes spectrales disjointes couvrent chacune une largeur de spectre de trente nanomètres et que les filtres possèdent un spectre d'absorption correspondant aux spectres d'émission possibles de la source de lumière.

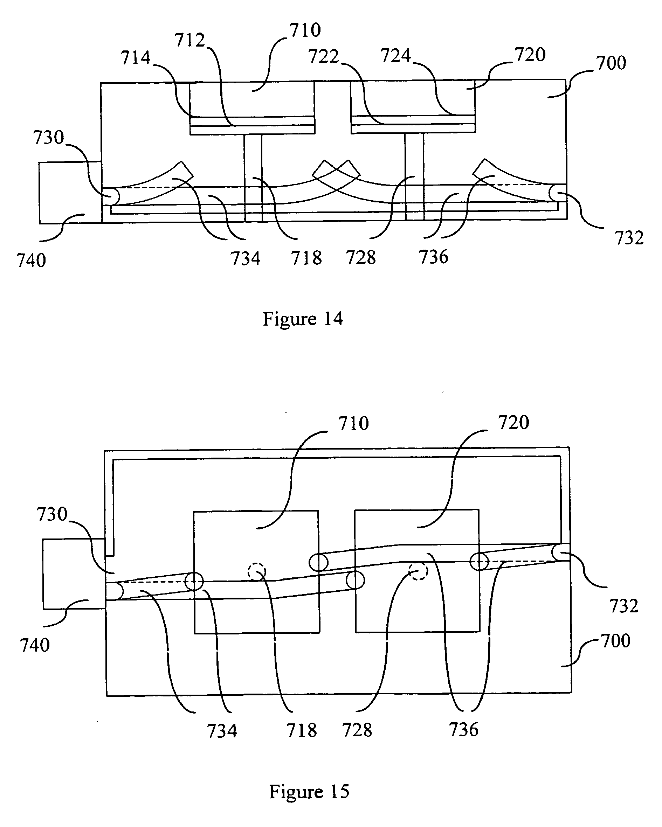

Dans le septième exemple, illustré par les figures 14 et 15, on utilise des images holographiques de différents symboles, images qui apparaissent lorsque la direction des rayons incidents correspond à leur angle de référence. Pour faire apparaître un symbole donné, on module la direction de provenance des rayons lumineux de la source de lumière pour faire correspondre cette direction avec l'une de celles qui servent de référence pour la formation des hologrammes.

On observe, en figures 14 et 15, un clavier 700 comportant des touches 710 et 720, munies d'hologrammes 712 et 714, touche 710, et 722 et 724, touche 720, et de contacteurs électriques, respectivement 718 et 728. Une source de lumière est constituée de deux diodes électroluminescentes 730 et 732, respectivement associées à des réseaux de fibres optiques 734 et 736 et commandées par un moyen de modulation 740.

Les contacteurs électriques 718 et 728 effectuent un contact électrique entre leurs bornes lorsque l'on presse ou appuie sur les touches 710 et 720, respectivement. Le moyen de modulation 740 est un commutateur électrique qui alimente l'une ou l'autre des diodes électroluminescentes 730 et 732.

Les diodes électroluminescentes 730 et 732 émettent des rayons lumineux visibles en des points opposés du clavier 700. Par exemple, la diode électroluminescente 730 émet des rayons lumineux à partir de la gauche du clavier 700 et la diode électroluminescente 732 émet des rayons lumineux à partir de la droite du clavier 700. Le réseau de fibres optiques 734, associé à la diode électroluminescente 730, éclaire les touches 710 et 720 sous le même angle correspondant à l'angle de référence des hologrammes présents sur les filtres 712 et 722. Le réseau de fibres optiques 736, associé à la diode électroluminescente 732, éclaire les touches 710 et 720 sous le même angle correspondant à l'angle de référence des hologrammes présents sur les filtres 714 et 724.

On observe que les angles d'incidence, sur les hologrammes, des rayons issus des diodes 730 et 732 sont différents. L'angle d'incidence des rayons issus de la diode 730 est celui qui sert de référence pour faire apparaître les hologrammes 712 et 722, tandis que l'angle d'incidence des rayons issus de la diode 732 est celui qui sert de référence pour faire apparaître les hologrammes 714 et 724.

Les hologrammes 712 et 714 représentent des symboles différents, par exemple "1" et ">", respectivement. Les hologrammes 722 et 724 représentent des symboles différents, par exemple "2" et "<", respectivement.

Lorsque le moyen de modulation 740 commande l'allumage de la diode électroluminescente 730 et l'extinction de la diode électroluminescente 732, les symboles représentés par les hologrammes 712 et 722, "1" et "2", apparaissent visibles sur le clavier 700. Lorsque le moyen de modulation 740 commande l'allumage de la diode électroluminescente 732 et l'extinction de la diode électroluminescente 730, les symboles représentés par les hologrammes 714 et 724, ">" et "<", apparaissent visibles sur le clavier 700.

Ainsi, grâce à la mise en oeuvre de la présente invention, par la modulation d'une caractéristique physique de la lumière émise par la source de lumière, ici la direction et/ou le sens des rayons émis, on fait apparaître, sur chaque touche du clavier 700, soit un symbole, soit un autre.

On observe ici que le nombre d'hologrammes pouvant être superposés et le nombre de diodes électroluminescentes correspondantes ne sont pas limités à deux mais peuvent atteindre le nombre désiré.

En variante du septième exemple illustré par les figures 14 et 15, ce sont des longueurs d'ondes différentes qui sont utilisées pour faire apparaître les différents hologrammes superposés portés par la même touche.

On observe que, pour mettre en oeuvre la présente invention, on peut fractionner un clavier en plusieurs ensembles de touches, chaque ensemble de touches formant par exemple l'un des exemples présentés ci-dessus.

On observe aussi que les symboles à afficher peuvent être prévus à la construction du clavier ou, dans des exemples particuliers, ces symboles peuvent être réalisés à posteriori, sur des supports vierges et inscriptibles, par exemple constitués d'au moins une couche de filtre sensible à une grandeur physique, par exemple la chaleur, par exemple fournie par un rayon laser dont le générateur prend la forme d'un stylo.

L'inscription de symboles sur les différentes couches de filtre est, par exemple, assurée grâce à un outil émettant plusieurs sources lumineuses de différentes caractéristiques (par exemple : une source laser en plusieurs puissances) dont chacune permet de marquer (ou brûler) un filtre spécifique. Cet outil peut prendre la forme d'un stylo facilitant ainsi son utilisation. Ainsi, des utilisateurs de différents pays peuvent, par exemple, tracer des lettres de leurs alphabets spécifiques.

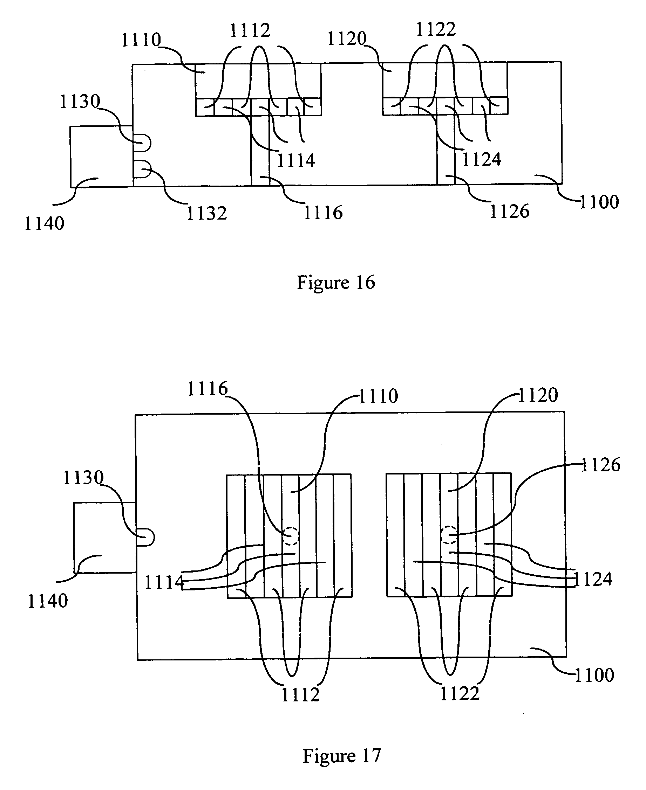

Dans le huitième exemple, illustré par les figures 16 à 19, on utilise des filtres chromatiques formant, en positif ou en négatif, différents symboles et, pour faire apparaître un symbole donné, on module la bande spectrale d'émission d'une source de lumière.

On observe, en figures 16 et 17, un clavier 1100 comportant des touches 1110 et 1120, munies de deux ensembles de filtres juxtaposés en alternance, respectivement 1112 et 1114, touche 1110, et 1122 et 1124, touche 1120, et de contacteurs électriques, respectivement 1116 et 1126. Une source de lumière est constituée de deux diodes électroluminescentes 1130 et 1132 commandées par un moyen de modulation 1140.

Les contacteurs électriques 1116 et 1126 effectuent un contact électrique entre leurs bornes lorsque l'on presse ou appuie sur les touches 1110 et 1120, respectivement. Le moyen de modulation 1140 est un commutateur électrique qui alimente l'une ou l'autre des diodes électroluminescentes 1130 et 1132.

Les diodes électroluminescentes 1130 et 1132 émettent dans des bandes spectrales différentes, préférentiellement disjointes. Par exemple, la diode électroluminescente 1130 émet des rayons lumineux dont les longueurs d'onde se trouvent entre 400 et 550 nanomètres et la diode électroluminescente 1132 émet des rayons lumineux dont les longueurs d'onde se trouvent entre 550 et 700 nanomètres.

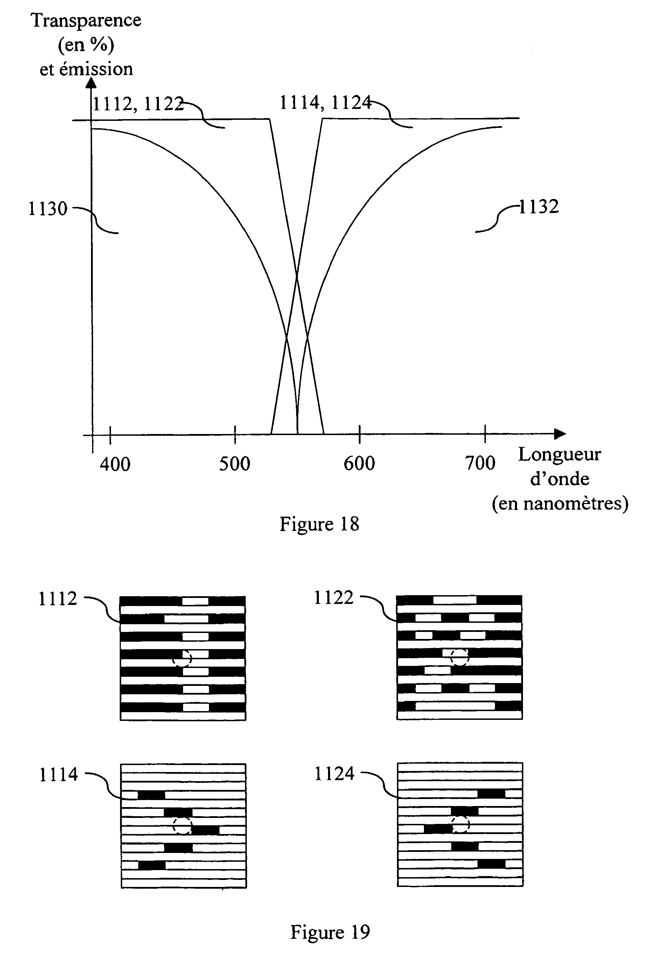

Les ensembles de filtres 1112 et 1114, d'une part et 1122 et 1124, d'autre part, sont juxtaposés en alternance, c'est-à-dire qu'entre deux filtres 1112, respectivement 1122, se trouve un filtre 1114, respectivement 1124, et réciproquement et que ces ensembles de filtres se trouvent, optiquement, en parallèle sur les chemins optiques des rayons lumineux issus des sources de lumière 1130 et 1132. Sur les ensembles de filtres 1112 et 1114 sont formés des symboles différents, par exemple "1" et ">", les filtres 1112 et 1114 étant absorbants pour toutes les longueurs d'ondes visibles en dehors des formes de ces symboles et possédant, dans la forme des symboles, des spectres de transmission correspondant respectivement sensiblement aux spectres d'émission des diodes électroluminescentes 1130 et 1132, comme indiqué en regard de la figure 18.

Sur les ensembles de filtres 1122 et 1124 sont formés des symboles différents, par exemple "2" et "<", les filtres 1122 et 1124 étant absorbants pour toutes les longueurs d'ondes dans les formes des symboles et possédant, en dehors de la forme des symboles, des spectres d'absorption correspondant respectivement sensiblement aux spectres d'émission des diodes électroluminescentes 1132 et 1130, comme indiqué en regard de la figure 18.

Les symboles portés par les ensembles de filtres 1112, 1114, 1122 et 1124 sont représentés en figure 19.

Lorsque le moyen de modulation 1140 commande l'allumage de la diode électroluminescente 1130 et l'extinction de la diode électroluminescente 1132, la source de lumière émet des rayons lumineux dont les longueurs d'onde se trouvent entre 400 et 550 nanomètres. Les rayons lumineux émis par la source de lumière qui atteignent les filtres 1112 les traversent dans la forme du symbole représenté par ce filtre et sont absorbés en dehors de cette forme. Les rayons qui atteignent les filtres 1114 sont absorbés aussi bien dans la forme du symbole porté par le filtre 1114 qu'en dehors de ce symbole puisque ce filtre est absorbant dans le spectre d'émission de la diode électroluminescente 1130. Pour la touche 1110, le symbole visible est donc le symbole porté par le filtre 1112, ici "1 ", qui apparaît en bleu sur fond noir.

De la même manière, pour la touche 1120, le symbole visible est le symbole porté par le filtre 1122, ici "2", qui apparaît en noir sur fond bleu.

Lorsque le moyen de modulation 1140 commande l'allumage de la diode électroluminescente 1132 et l'extinction de la diode électroluminescente 1130, la source de lumière émet des rayons lumineux dont les longueurs d'onde se trouvent entre 550 et 700 nanomètres. Les rayons lumineux émis par la source de lumière qui atteignent les filtres 1114 les traversent dans la forme du symbole représenté par ce filtre et sont absorbés en dehors de cette forme. Les rayons qui atteignent les filtres 1112 sont absorbés aussi bien dans la forme du symbole porté par le filtre 1112 qu'en dehors de ce symbole puisque ce filtre est absorbant dans le spectre d'émission de la diode électroluminescente 1132. Pour la touche 1110, le symbole visible est donc le symbole porté par le filtre 1114, ici ">", qui apparaît en orangé sur fond noir.

De la même manière, pour la touche 1120, le symbole visible est le symbole porté par le filtre 1124, ici "<", qui apparaît en noir sur fond orangé.

Ainsi, grâce à la mise en oeuvre de la présente invention, par la modulation d'une caractéristique physique de la lumière émise par la source de lumière, ici la longueur d'onde des rayons émis, on fait apparaître, sur chaque touche du clavier 1100, soit un symbole, soit un autre.

Par exemple, la mise en oeuvre de la présente invention permet que les symboles ">" et "<" soient affichés lorsque le clavier sert à jouer, pour indiquer des directions de déplacement nécessaires pour la mise en oeuvre d'un jeu, et que les symboles "1" et "2" soient affichés lorsque le clavier sert à saisir des chiffres ou des numéros, pour effectuer un calcul ou appeler un numéro de téléphone.

En variante du huitième exemple, illustré en figures 16 à 19, la source de lumière comporte une diode électroluminescente dont le spectre de longueur d'ondes d'émission dépend d'au moins une caractéristique électrique du signal qui lui est appliqué, par exemple la tension.

En variante du huitième exemple, illustré en figures 16 à 19, la source de lumière comporte deux diodes électroluminescentes émettant dans le même spectre visible, associées, chacune, à un filtre chromatique.

En variante du huitième exemple, illustré en figures 16 à 19, la source de lumière comporte une diode électroluminescente suivie d'un filtre polariseur dichroïque placé optiquement à la suite d'un écran à cristaux liquides à une seule cellule et ne comportant qu'un filtre polarisant en entrée, la commande de cet écran à cristaux liquides permettant de faire varier la polarisation de sortie de l'écran à cristaux liquides et, partant, la couleur des rayons lumineux issus de la source de lumière.

On observe ici que le nombre d'ensembles de filtres pouvant être juxtaposés et le nombre de diodes électroluminescentes correspondantes ne sont pas limités à deux mais peuvent atteindre le nombre de bandes spectrales différentes que la source de lumière et les filtres chromatiques peuvent avoir, par exemple dix, si des bandes spectrales disjointes couvrent chacune une largeur de spectre de trente nanomètres et que les filtres possèdent un spectre d'absorption correspondant aux spectres d'émission possibles de la source de lumière.

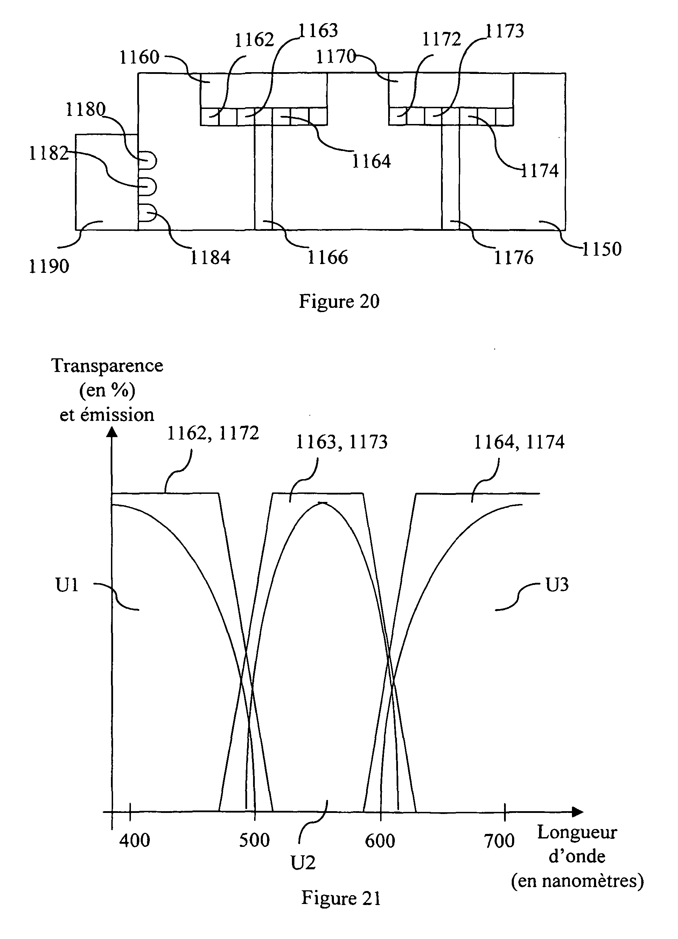

Dans le neuvième exemple, illustré par les figures 20 et 21, on met en oeuvre trois ensembles de filtres juxtaposés en alternance.

On observe, en figure 20, un clavier 1150 comportant des touches 1160 et 1170, munies de trois ensembles de filtres juxtaposés en alternance, respectivement 1162, 1163 et 1164, touche 1160, et 1172, 1173 et 1174, touche 1170, et de contacteurs électriques, respectivement 1166 et 1176. Une source de lumière est constituée de trois diodes électroluminescentes 1180, 1182 et 1184 commandées par un moyen de modulation 1190.

Les contacteurs électriques 1166 et 1176 effectuent un contact électrique entre leurs bornes lorsque l'on presse ou appuie sur les touches 1160 et 1170, respectivement. Le moyen de modulation 1190 est un commutateur électrique qui alimente l'une ou l'autre des diodes électroluminescentes 1130, 1132 et 1134.

Les diodes électroluminescentes 1130, 1132 et 1134 émettent dans des bandes spectrales différentes, préférentiellement disjointes. Par exemple, la diode électroluminescente 1130 émet des rayons lumineux dont les longueurs d'onde se trouvent entre 400 et 500 nanomètres, la diode électroluminescente 1132 émet des rayons lumineux dont les longueurs d'onde se trouvent entre 500 et 600 nanomètres et la diode électroluminescente 1134 émet des rayons lumineux dont les longueurs d'onde se trouvent entre 600 et 700 nanomètres.

Les ensembles de filtres 1162, 1163 et 1164 sont juxtaposés en alternance, c'est-à-dire qu'entre deux filtres 1162, se trouvent un filtre 1163 et un filtre 1164, qu'entre deux filtres 1163, se trouvent un filtre 1162 et un filtre 1164, qu'entre deux filtres 1164, se trouvent un filtre 1163 et un filtre 1162, et que ces ensembles de filtres se trouvent, optiquement, en parallèle sur les chemins optiques des rayons lumineux issus des sources de lumière 1180, 1182 et 1184.

Sur les ensembles de filtres 1162, 1163 et 1164 sont formés des symboles différents, par exemple "1", "A" et ">", les filtres 1162, 1163 et 1164 étant absorbants pour toutes les longueurs d'ondes visibles en dehors des formes de ces symboles et possédant, dans la forme des symboles, des spectres de transmission correspondant respectivement sensiblement aux spectres d'émission U1, U2 et U3 des diodes électroluminescentes 1180, 1182 et 1184, comme indiqué en regard de la figure 21.

Sur les ensembles de filtres 1172, 1173 et 1174 sont formés des symboles différents, par exemple "2", "B" et "<", les filtres 1172, 1173 et 1174 étant absorbants pour toutes les longueurs d'ondes dans les formes des symboles et possédant, en dehors de la forme des symboles, des spectres d'absorption correspondant respectivement sensiblement aux spectres d'émission U1, U2 et U3 des diodes électroluminescentes 1180, 1182 et 1184, comme indiqué en regard de la figure 21.

On comprend que lorsque le moyen de modulation 1190 allume uniquement la diode électroluminescente 1180, seuls les symboles portés par les ensembles de filtres 1162 et 1172 apparaissent, respectivement en bleu sur fond noir et en noir sur fond bleu. De même, lorsque le moyen de modulation 1190 allume uniquement la diode électroluminescente 1182, seuls les symboles portés par les ensembles de filtres 1163 et 1173 apparaissent, respectivement en vert-jaune sur fond noir et en noir sur fond vert-jaune. Enfin, lorsque le moyen de modulation 1190 allume uniquement la diode électroluminescente 1184, seuls les symboles portés par les ensembles de filtres 1164 et 1174 apparaissent, respectivement en rouge sur fond noir et en noir sur fond rouge.

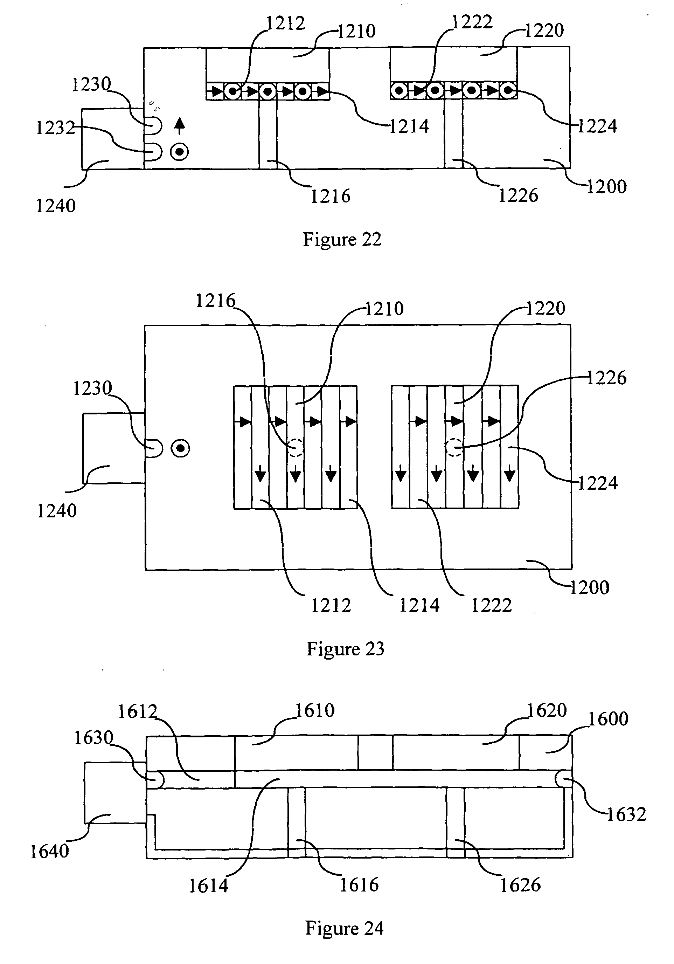

Dans le dixième exemple illustré en figures 22 et 23, on utilise des ensembles de filtres polariseurs possédant le même axe de polarisation et un axe de polarisation perpendiculaire à l'autre ensemble de filtres polariseurs. Sur ces ensembles de filtres polariseurs sont formés différents symboles et, pour faire apparaître un symbole donné, on module la direction de polarisation principale d'émission d'une source de lumière.

On observe que pour former des symboles sur filtres polarisants, on peut prendre des filtres polariseurs et détruire localement leur capacité de polarisation par chauffage local. Alternativement, on peut découper un film polarisant et coller la forme que l'on souhaite sur une touche de clavier.

On observe, en figures 22 et 23, un clavier 1200 comportant des touches 1210 et 1220, munies d'ensembles de filtres, respectivement 1212 et 1214, touche 1210, et 1222 et 1224, touche 1220 et de contacteurs électriques, respectivement 1216 et 1226. Une source de lumière est constituée de deux diodes électroluminescentes 1230 et 1232 commandées par un moyen de modulation 1240.

Les contacteurs électriques 1216 et 1226 effectuent un contact électrique entre leurs bornes lorsque l'on presse ou appuie sur les touches 1210 et 1220, respectivement. Le moyen de modulation 1240 est un commutateur électrique qui alimente l'une ou l'autre des diodes électroluminescentes 1230 et 1232.

Les diodes électroluminescentes 1230 et 1232 émettent des rayons lumineux visibles possédant des axes de polarisation perpendiculaires, entre les rayons émis par les deux diodes. Par exemple, la diode électroluminescente 1230 émet des rayons lumineux dont l'axe de polarisation est parallèle au plan de coupe utilisé en figure 22 et la diode électroluminescente 1232 émet des rayons lumineux dont l'axe de polarisation est perpendiculaire à ce plan de coupe. A cet effet, par exemple, les diodes 1230 et 1232 émettent dans tout le spectre visible et sont associées à ou incorporent des filtres polariseurs (non représentés).

Les filtres 1212 et 1214, d'une part, et les filtres 1222 et 1224, d'autre part sont juxtaposés en alternance, c'est-à-dire qu'entre deux filtres 1212, respectivement 1222, se trouve un filtre 1214, respectivement 1224, et réciproquement et que ces ensembles de filtres se trouvent, optiquement, en parallèle sur les chemins optiques des rayons lumineux issus des sources de lumière 1230 et 1232. Sur les ensembles de filtres 1212 et 1214 sont formés des symboles différents, par exemple "1" et ">", les filtres 1212 et 1214 étant respectivement transparents en dehors des formes de ces symboles et possédant, dans la forme des symboles, des axes de polarisation correspondant respectivement aux axes de polarisation des diodes électroluminescentes 1230 et 1232.

Sur les filtres 1222 et 1224 sont formés des symboles différents, par exemple "2" et "<", les filtres 1222 et 1224 étant respectivement transparents dans les formes de ces symboles et possédant, en dehors de ces symboles, des axes de polarisation correspondant respectivement aux axes de polarisation des diodes électroluminescentes 1230 et 1232.

Lorsque le moyen de modulation 1240 commande l'allumage de la diode électroluminescente 1230 et l'extinction de la diode électroluminescente 1232, la source de lumière émet des rayons lumineux dont l'axe de polarisation est parallèle au plan de coupe utilisé en figure 19. Les rayons lumineux émis par la source de lumière traversent donc le filtre 1212 aussi bien en dehors du symbole représenté par ce filtre que dans ce symbole. Par ailleurs, d'autres rayons lumineux traversent le filtre 1214 en dehors de la forme du symbole porté par le filtre 1214 et sont arrêtés dans la forme du symbole. Pour la touche 1210, le symbole visible est donc le symbole porté par le filtre 1214, ici ">", qui apparaît en noir sur un fond dont la couleur correspond au spectre d'émission de la diode électroluminescente 1230, par exemple sur fond blanc.

De même, pour la touche 1220, le symbole visible est celui qui est porté par le filtre 1224, ici "<", qui apparaît lumineux sur fond noir, la couleur du symbole correspondant au spectre d'émission de la diode électroluminescente 1230, par exemple blanche.

Inversement, lorsque le moyen de modulation 1240 commande l'allumage de la diode électroluminescente 1232 et l'extinction de la diode électroluminescente 1230, les symboles qui apparaissent visibles sont les symboles portés par les filtres 1212 et 1222, soit "1" et "2", respectivement.

Ainsi, grâce à la mise en oeuvre de la présente invention, par la modulation d'une caractéristique physique de la lumière émise par la source de lumière, ici la polarisation des rayons émis, on fait apparaître, sur chaque touche du clavier 1200, soit un symbole, soit un autre.

En variante du dixiéme exemple, illustré en figures 22 et 23, la source de lumière comporte une diode électroluminescente suivie d'un écran à cristaux liquides à une seule cellule et ne comportant qu'un filtre polarisant en entrée, la commande de cet écran à cristaux liquides permettant de faire varier la polarisation de sortie de l'écran à cristaux liquides.

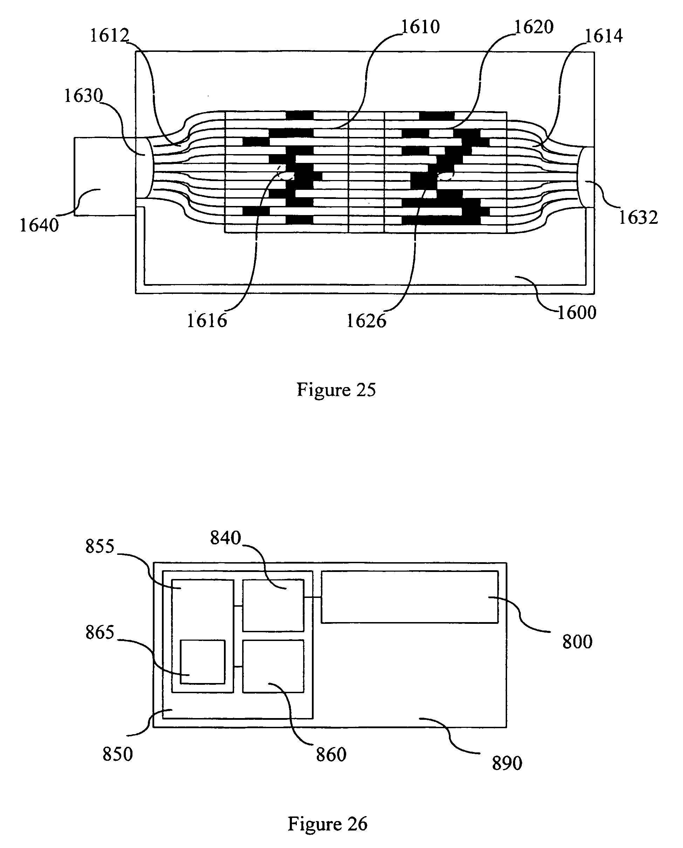

Dans le onzième exemple, illustré en figures 24 et 25, on utilise des conducteurs optiques (ici des fibres optiques) parallèles partiellement dépolis pour former différents symboles et, pour faire apparaître un symbole donné, on émet de la lumière dans l'un ou l'autre des conducteurs optiques.

On observe, en figures 24 et 25, un clavier 1600 comportant des touches 1610 et 1620, munies de réseaux de fibres optiques juxtaposées parallèlement et alternées 1612 et 1614 et de contacteurs électriques, respectivement 1616 et 1626. Une source de lumière est constituée de deux diodes électroluminescentes 1630 et 1632 commandées par un moyen de modulation 1640.

Les contacteurs électriques 1616 et 1626 effectuent un contact électrique entre leurs bornes lorsque l'on presse ou appuie sur les touches 1610 et 1620, respectivement. Le moyen de modulation 1640 est un commutateur électrique qui alimente l'une ou l'autre des diodes électroluminescentes 1630 et 1632.

Les diodes électroluminescentes 1630 et 1632 sont placées en regard des entrées des différents réseaux de fibres optiques. Par exemple, la diode électroluminescente 1630 émet des rayons lumineux dans le réseau de fibres optiques 1612 et la diode électroluminescente 1632 émet des rayons lumineux dans le réseau de fibres optiques 1614.

Pour la touche de clavier 1610, sur les réseaux de fibres optiques 1612 et 1614 sont formés des symboles différents, par exemple "1" et ">", les réseaux de fibres optiques 1612 et 1614 étant dépolis dans la forme de ces symboles, respectivement.

Pour la touche de clavier 1620, sur les réseaux de fibres optiques 1612 et 1614 sont formés des symboles différents, par exemple "2" et "<", les réseaux de fibres optiques 1612 et 1614 étant dépolis dans la forme de ces symboles, respectivement.

En figure 25, les parties dépolies des fibres optiques sont représentées en noir.

Lorsque le moyen de modulation 1640 commande l'allumage de la diode électroluminescente 1630 et l'extinction de la diode électroluminescente 1632, la source de lumière émet des rayons lumineux dans le réseau de fibres optiques 1612, qui, dans les zones dépolies apparaît lumineux, les symboles visibles étant donc les symboles "1" et "2".

Lorsque le moyen de modulation 1640 commande l'allumage de la diode électroluminescente 1632 et l'extinction de la diode électroluminescente 1630, la source de lumière émet des rayons lumineux dans le réseau de fibres optiques 1614, qui, dans les zones dépolies apparaît lumineux, les symboles visibles étant donc les symboles ">" et "<".

Ainsi, grâce à la mise en oeuvre de la présente invention, par la modulation d'une caractéristique physique de la lumière émise par la source de lumière, ici la position de l'émission des rayons émis, on fait apparaître, sur chaque touche du clavier 1600, soit un symbole, soit un autre.

Pour tous les exemples exposés ci-dessus incorporant des filtres absorbants des rayons lumineux de certaines longueurs d'onde, ces filtres peuvent par exemple être des filtres interférentiels dans lesquels des couches de matériaux d'indice optique différents sont superposées, ou des gélatines, des supports transparents ou translucides sur lesquels des motifs, symboles ou messages sont selon la présente invention imprimés avec des encres de couleurs ou selon un exemple marqués avec un marqueur délivrant une encre colorée ou selon un exemple une craie de couleur. Ce dernier cas a pour avantage qu'il permet d'inscrire et réinscrire, à posteriori, des messages de différentes couleurs sur un même support transparent ou translucide, par exemple un tableau ou un panneau rétro-éclairé, chaque encre de marqueur correspondant à l'un des spectres de couleurs émis sélectivement par la ou les sources de lumière du rétro-éclairage. Une application de ce cas peut être faite dans des panneaux d'affichage ré-inscriptibles pour des commerçants, par exemple pour indiquer des promotions ou des menus. En mettant en oeuvre la présente invention, le même panneau peut successivement afficher plusieurs messages et les animer.

On observe, en figure 26, un circuit électronique 850 associé à un clavier 800 dans un appareil électronique 890. Le circuit électronique 850 comporte un moyen de commande de commutation 855 et un moyen d'exploitation 860 des symboles sélectionnés au clavier 800.

Dans l'exemple illustré en figure 26, le moyen de commande de commutation 855 comporte un capteur d'une grandeur physique 865 et deux sorties, dont l'une commande le moyen de modulation 840 du clavier 800 et dont l'autre est reliée au moyen d'exploitation 860.

Le circuit électronique 850 est adapté à assurer au moins une fonction de l'appareil électronique 890 parmi les suivantes, grâce à des circuits spécifiques (non représentés) du moyen d'exploitation 860 :
- assistant numérique personnel (connu sous le nom de PDA pour personal digital assistant,
- organiseur,
- téléphone, particulièrement téléphone mobile,
- terminal d'accès à Internet ou à un autre réseau informatique,
- console de jeu,
- ordinateur portable,
- distributeur automatique de billets,
- tableau de bord,
- montre,
- télécommande,
- baladeur,
- système de positionnement, par exemple par référence à des signaux satellitaires,
- récepteur de signaux audiovisuels, par exemple téléviseur portable, radio portable ou autoradio,
- équipement électronique, bureautique ou de loisir,
- télécopieur,
- photocopieur,
- scanneur,
- lecteur de supports enregistrés,
- installation de domotique,
- appareil électro-ménager,
- équipement médical,
- appareil de mesure,
- automate d'analyse,
- équipement automobile,
- panneau d'indication,
- interrupteur,
- dispositif de jeu,
- élément de décoration,
- lampe
- bouton électrique et
- panneau d'affichage.

Le clavier 800 est conforme à un exemple du clavier objet de la présente invention, par exemple l'un de ceux exposés en regard des figures 1 à 15.

Le capteur d'une grandeur physique 865 est adapté à capter une variation d'au moins une grandeur physique, par exemple un appui sur une touche, un masquage optique, une position de l'appareil 890. Il peut donc être constitué, par exemple, d'au moins une photodiode, d'au moins un phototransistor, d'un commutateur manuel, d'une touche de clavier, d'un capteur d'orientation.

En variante, le moyen de commande de commutation est un programme ou une routine de programme, par exemple agissant en fonction de choix effectués par l'utilisateur au cours d'une navigation dans un menu de fonctions et de paramètres.

La commutation du moyen de commutation provoque le changement de symboles affichés sur le clavier 800 et le changement d'interprétation des symboles saisis avec ce clavier, en vue de leur exploitation par le moyen d'exploitation 860.

Par exemple, deux ensembles de symboles représentent deux ensembles de lettres de l'alphabet dont la commutation est commandée grâce à un capteur photosensible qui peut être masqué par un doigt de l'utilisateur.

Selon un autre exemple d'application, pour réaliser un clavier de télécommande universelle, la présente invention permet d'affecter successivement les mêmes touches de clavier à différentes interfaces auxquelles l'utilisateur s'est habitué (téléviseur, chaîne musicale, magnétoscope, lecteur de supports numériques, ...).

En variante, le circuit électronique 850 est muni d'un capteur de luminosité ambiante (par exemple une photodiode exposée à la lumière ambiante) et commande la luminosité de chaque source de lumière en fonction croissante de la luminosité ambiante.

En variante, le circuit électronique 850 est muni d'un capteur de présence d'une main de l'utilisateur (par exemple un émetteur-récepteur de lumière infrarouge pulsée, comme exposé en regard des figures 27 à 30, pour sélectionner les messages ou symboles affichés en fonction de la main utilisée pour saisir un symbole au clavier.

Les figures 27 à 30 représentent des affichages sur clavier adaptés à différentes mises en oeuvre de la présente invention.

En figure 27 est représenté un affichage sur clavier adapté à l'utilisation en téléphonie vocale d'un appareil électronique. On retrouve, affichés sur le clavier, les symboles habituellement inscrit en gros caractères sur les touches d'un clavier de téléphone.

En figure 28 est représenté un affichage sur clavier adapté aux utilisations textuelles (par exemple prise de note, rédaction d'un message court, ou SMS, mémorisation d'un nom ou d'une adresse). On retrouve, affichés sur le clavier, les lettres de l'alphabet.

Les figures 29 et 30 représentent, respectivement, des affichages pour interface de jeux, et interface multimédia ou organiseur.

En variante, un moyen de détection de présence, par exemple un émetteur-récepteur d'infrarouges pulsés, détecte si une main prédéterminée (par exemple la main gauche) est utilisée pour saisir un symbole affiché. L'émetteur-récepteur d'infrarouges est, pour la main gauche, placé dans le coin en bas à gauche du clavier. En fonction de la main qui est utilisée pour saisir un symbole, l'affichage est modifié, par exemple pour faire apparaître les symboles "A" à "M" pour saisie avec la main gauche sur un clavier à treize touches disponibles pour l'alphabet et les lettres "N" à "Z" pour saisie avec la main droite.

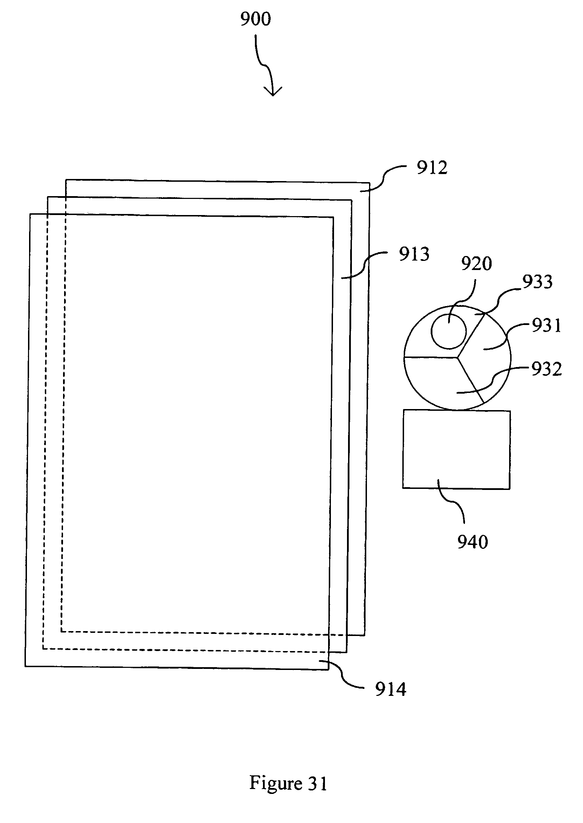

La figure 31 représente, schématiquement, un afficheur mettant en oeuvre un fonctionnement similaire à celui décrit en regard des figures 12 et 13 pour afficher différents messages, par exemple publicitaires, de signalisation routière, artistiques, d'horaires de transports en commun.

Dans cet affichage, on utilise des filtres chromatiques portant, chacun un message à afficher et, pour faire apparaître un message donné, on module la bande spectrale d'émission d'une source de lumière.

On observe, en figure 31, un panneau d'affichage 900 comportant des affiches-filtres 912, 913 et 914. Une source de lumière est constituée d'une source de lumière blanche 920 associée à un carrousel portant trois filtres chromatiques 931, 932 et 933, mis en mouvement par un moteur commandé par un moyen de modulation 940 pour que l'un ou l'autre des filtres se trouve en regard de la source de lumière 920.

Les filtres chromatiques 931, 932 et 933 sont adaptés à laisser passer la lumière dans trois bandes spectrales différentes, préférentiellement disjointes. Par exemple, le filtre 931 est transparent aux rayons lumineux dont les longueurs se trouvent entre 400 et 500 nanomètres, le filtre 932 est transparent aux rayons lumineux dont les longueurs se trouvent entre 500 et 600 nanomètres et le filtre 933 est transparent aux rayons lumineux dont les longueurs se trouvent entre 600 et 700 nanomètres.

Les affiches 912 à 914, qui constituent des filtres, éventuellement diffusant, sont superposées, c'est-à-dire qu'elles se trouvent successivement placés sur le chemin optique des rayons lumineux issus de la source de lumière 920. Les affiches 912 à 914 portent chacune un message, ces messages étant, éventuellement, combinés, c'est-à-dire que leur constitution est coordonnée pour qu'au moins deux messages portés par deux affiches forment un nouveau message.

Les affiches 912 à 914 sont respectivement transparentes en dehors des messages et possèdent, dans la forme des messages, des spectres d'absorption correspondant respectivement sensiblement aux trois spectres de transparence des filtres 931, 932 et 933.

Lorsque le moyen de modulation 940 provoque le positionnement du filtre 931 devant la source de lumière blanche 920, la source de lumière émet des rayons lumineux dont les longueurs d'onde se trouvent entre 400 et 500 nanomètres. Les rayons lumineux émis par la source de lumière traversent l'affiche 912 en dehors du message représenté par ce filtre et sont absorbés dans ce message puisque son spectre d'absorption correspond au spectre d'éclairage. Puis, les rayons restants traversent les affiches 913 et 914 aussi bien dans la forme du message porté par ces affiches qu'en dehors de ces messages puisque ces affiches sont transparentes dans le spectre d'éclairage. Le message affiché est donc celui porté par l'affiche 912, qui apparaît en noir sur fond bleu.

Lorsque le moyen de modulation 940 provoque le positionnement du filtre 932 devant la source de lumière blanche 920, la source de lumière émet des rayons lumineux dont les longueurs d'onde se trouvent entre 500 et 600 nanomètres. Les rayons lumineux traversent l'affiche 912, aussi bien dans la forme du message porté par cette affiche qu'en dehors de ce message puisque cette affiche est transparente dans le spectre d'éclairage.

Les rayons lumineux traversent ensuite l'affiche 913 en dehors du message représenté par cette affiche et sont absorbés dans ce message puisque son spectre d'absorption correspond au spectre d'éclairage. Puis, les rayons restants traversent l'affiche 914 aussi bien dans la forme du message porté par cette affiche qu'en dehors de ce message puisque cette affiche est transparente dans le spectre d'éclairage. Le message visible est donc le message porté par l'affiche 913, qui apparaît en noir sur fond vert.

Lorsque le moyen de modulation 940 provoque le positionnement du filtre 933 devant la source de lumière blanche 920, la source de lumière émet des rayons lumineux dont les longueurs d'onde se trouvent entre 600 et 700 nanomètres.

Les rayons lumineux émis par la source de lumière traversent les affiches 912 et 913 aussi bien dans la forme du message porté par ces affiches qu'en dehors de ces messages puisque ces affiches sont transparentes dans le spectre d'éclairage.

Les rayons lumineux traversent ensuite l'affiche 914 en dehors du message représenté par cette affiche et sont absorbés dans ce message puisque son spectre d'absorption correspond au spectre d'éclairage.

Le message visible est donc le message porté par l'affiche 914, qui apparaît en noir sur fond rouge.

Le procédé d'affichage correspondant aux dispositifs illustrés aux figures 1 à 15, 31, 33 et 34, comporte :
- une étape d'allumage d'une source de lumière adaptée à éclairer, par rétro-éclairage, une surface d'affichage munie d'au moins deux filtres superposés,
- une étape de modulation d'au moins une caractéristique physique de ladite source de lumière, les au moins deux filtres superposés de la surface d'affichage correspondant, chacun, à une valeur de caractéristique physique modulée par le moyen de modulation et à un message ou un symbole à afficher sur ladite surface d'affichage.

Dans le cas des claviers, le procédé comporte aussi une étape de détection d'une interaction entre l'utilisateur et au moins une touche du clavier et une étape de mise en correspondance de cette interaction avec une signification correspondant à chaque symbole affiché sur le clavier pour la valeur de modulation de caractéristique physique mise en oeuvre au moment de l'interaction, ladite signification correspondant ainsi à la valeur de modulation de caractéristique physique de la source de lumière et variant avec elle.

Ainsi, grâce à la mise en oeuvre de la présente invention, par la modulation d'une caractéristique physique de la lumière émise par la source de lumière, ici la longueur d'onde des rayons émis, on fait apparaître, sur le panneau d'affichage 900, soit un message, soit un autre.

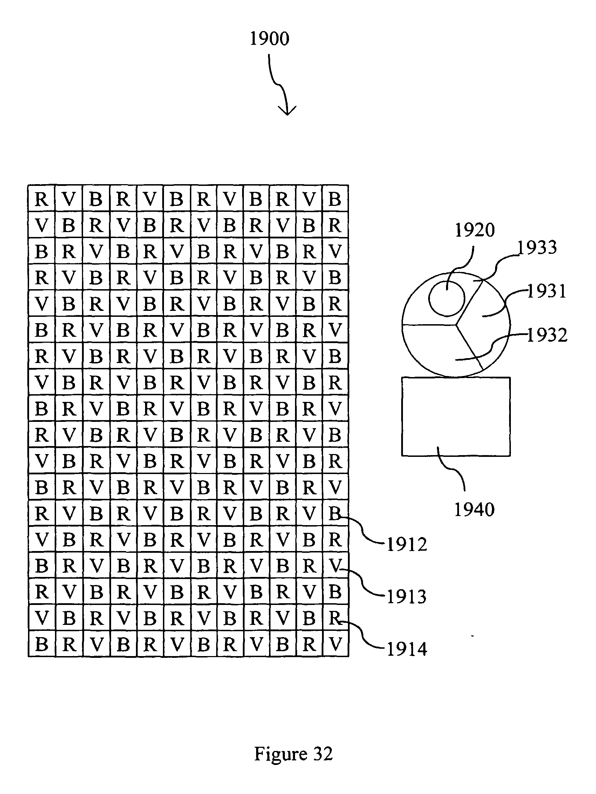

La figure 32 représente, schématiquement, un afficheur mettant en oeuvre un fonctionnement similaire à celui décrit en regard des figures 20 et 21 pour afficher différents messages, par exemple publicitaires, de signalisation routière, artistiques, d'horaires de transports en commun.

Dans cet affichage, on utilise des filtres chromatiques portant, chacun un message à afficher et, pour faire apparaître un message donné, on module la bande spectrale d'émission d'une source de lumière.

On observe, en figure 32, un panneau d'affichage 1900 comportant des ensembles de filtres, ici carrés, juxtaposés et alternés 1912, 1913 et 1914. Une source de lumière est constituée d'une source de lumière blanche 1920 associée à un carrousel portant trois filtres chromatiques 1931, 1932 et 1933, mis en mouvement par un moteur commandé par un moyen de modulation 1940 pour que l'un ou l'autre des filtres 1931, 1932 et 1933 se trouve en regard de la source de lumière 1920.

Les filtres chromatiques 1931, 1932 et 1933 sont adaptés à laisser passer la lumière dans trois bandes spectrales différentes, préférentiellement disjointes. Par exemple, le filtre 1931 est transparent aux rayons lumineux dont les longueurs se trouvent entre 400 et 500 nanomètres, le filtre 1932 est transparent aux rayons lumineux dont les longueurs se trouvent entre 500 et 600 nanomètres et le filtre 1933 est transparent aux rayons lumineux dont les longueurs se trouvent entre 600 et 700 nanomètres.

Les ensembles de filtres ou affiches 1912 à 1914 portent chacun un message, ces messages étant, éventuellement, combinés, c'est-à-dire que leur constitution est coordonnée pour qu'au moins deux messages portés par deux ensembles de filtres ou affiches forment un nouveau message.

Les ensembles de filtres 1912 à 1914 sont respectivement absorbants en dehors des messages et possèdent, dans la forme des messages, des spectres de transmission correspondant respectivement sensiblement aux trois spectres de transparence des filtres 1931, 1932 et 1933.

On comprend que, selon le filtre 1931, 1932 ou 1933 qui se trouve devant la source de lumière 1920, les messages visibles sont ceux portés par les ensembles de filtres 1912, 1913 ou 1914, respectivement.

En variante, on met en oeuvre au moins deux sources de lumières pour créer des effets d'animation de ce qui apparaît affiché, par exemple de fondu-enchaîné ou de transition progressive, d'un point ou d'un côté à l'ensemble de la surface d'affichage entre les messages susceptibles d'êtres affichés. En variantes, les messages sont combinés, au moins deux messages portés par deux ensembles de filtres juxtaposés en alternance étant associés, par exemple dans un message publicitaire en deux couleurs. L'utilisation de deux sources de lumières permet alors de faire apparaître successivement les différentes couleurs du même message pour attirer le regard.

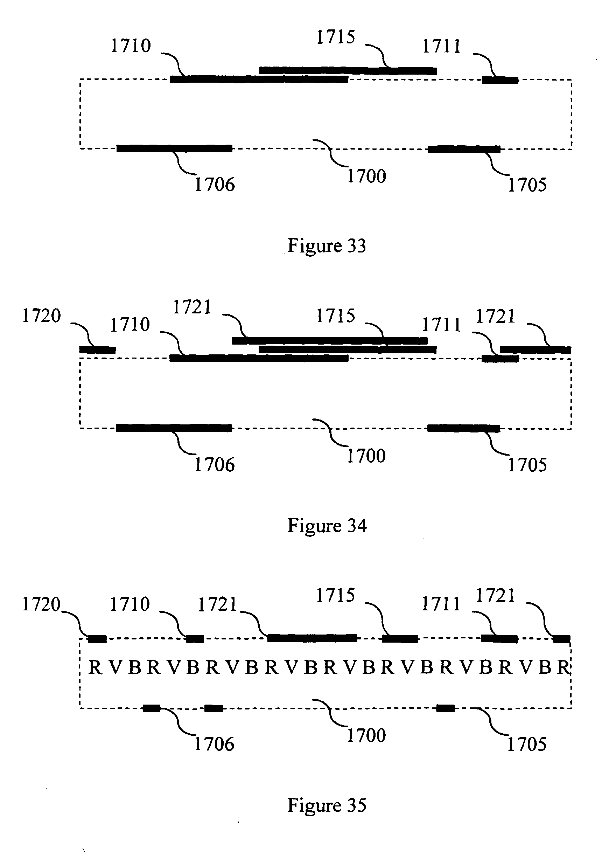

On observe, en figures 33 à 35, une affiche imprimée sur chaque face avec des couleurs différentes sur les différentes faces représentant différents symboles ou messages ou des éléments de messages coordonnés. Les échelles ne sont pas respectées et seule une petite partie de l'affiche est représentée, en coupe, sous forme d'un rectangle 1700 en traits discontinus. Les traits épais, en noir, représentent les différentes zones ayant reçu de l'encre. On a supposé, ici, que seules trois gammes spectrales étaient utilisées, par exemple :
- une gamme spectrale autour du rouge, en face avant de chacune des affiches (en bas de chacune des figures) et, éventuellement aussi en face arrière (figures 34 et 35) et
- deux gammes spectrales, respectivement autour du vert et autour du bleu, en face arrière de chacune des affiches (en haut sur chacune des figures).

En figure 33, les encres se superposent sur la face arrière. Les zones ayant reçu de l'encre rouge sont référencées 1705 et 1706. Les zones ayant reçu de l'encre verte sont référencées 1710 et 1711 et la zone ayant reçu de l'encre bleue est référencée 1715. On comprend que ces zones sont indépendantes et peuvent représenter des symboles ou messages indépendants ou coordonnés.

En figure 34, on retrouve les mêmes éléments qu'en figure 33, auxquels s'ajoutent, en face arrière, des zones 1720 et 1721, encrées en rouge, de la même encre que les zones 1705 et 1706 mais formant leur complément de telle manière que pour chaque partie de l'affiche qui est encrée en rouge en face avant, elle n'est pas encrée en rouge en face arrière, et réciproquement.

En figure 35, les encres présentent les mêmes symboles et messages qu'en figure 34, avec les mêmes couleurs, mais elles ne se superposent pas, formant ainsi des filtres juxtaposés en alternance.

A la lumière ambiante, lorsque la source de lumière de rétro-éclairage est éteinte, seul ce qui est imprimé sur la face avant est visible. De nuit, lorsque la source de lumière de rétro-éclairage est allumée et émet, sur au moins une partie de l'affiche, les couleurs correspondant à deux des gammes spectrales, seul le message correspondant à la troisième gamme spectrale est visible. De nuit, lorsque la source de lumière de rétro-éclairage est allumée et émet, sur au moins une partie de l'affiche, les couleurs correspondant à une seule des gammes spectrales, seuls les messages correspondant aux autres gammes spectrales sont visibles.

En ce qui concerne les exemples illustrés aux figures 34 et 35, un rétro-éclairage avec une lumière blanche fait disparaître le message porté par l'encre de couleur rouge puisque toutes les parties de l'affiche portent une couche d'encre de couleur rouge, soit en face avant, soit en face arrière et les messages portés par les deux autres couleurs apparaissent.

On observe que l'utilisation de la face avant pour afficher un message ou symbole lorsque la source de lumière est éteinte ne se limite pas aux affiches mais peut être mise en oeuvre aussi bien dans les affiches que dans les boutons poussoirs, dans les claviers ou dans les autres applications de la présente invention détaillées dans la description.

Le procédé d'affichage correspondant aux dispositifs illustrés aux figures 16 à 25, 32 et 35 comporte :
- une étape d'allumage d'une source de lumière adaptée à éclairer, par rétro-éclairage, une surface d'affichage,
- une étape de modulation d'au moins une caractéristique physique de ladite source de lumière, la surface d'affichage étant munie d'au moins deux ensembles de filtres juxtaposés en alternance, chaque ensemble de filtres correspondant alternativement à une valeur de caractéristique physique modulée par le moyen de modulation et à un message à afficher sur ladite surface d'affichage, lesdits filtres étant placés sur un chemin optique suivi par des rayons lumineux issus de la source de lumière.

Dans le cas des claviers, le procédé comporte aussi une étape de détection d'une interaction entre l'utilisateur et au moins une touche du clavier et une étape de mise en correspondance de cette interaction avec une signification correspondant à chaque symbole affiché sur le clavier pour la valeur de modulation de caractéristique physique mise en oeuvre au moment de l'interaction, ladite signification correspondant ainsi à la valeur de modulation de caractéristique physique de la source de lumière et variant avec elle.

Ainsi, grâce à la mise en oeuvre de la présente invention, par la modulation d'une caractéristique physique de la lumière émise par la source de lumière, ici la longueur d'onde des rayons émis, on fait apparaître, sur le panneau d'affichage 1900, soit un message, soit un autre.

En variante des exemples, illustrés en figures 31 ou 32, la source de lumière comporte trois lampes émettant dans trois spectres visibles ou sont associées, chacune, à un filtre chromatique.

On observe ici que le nombre d'affiches-ensembles de filtres pouvant être juxtaposées et le nombre de spectres d'émission correspondants ne sont pas limités à trois mais peuvent atteindre le nombre de bandes spectrales différentes que la source de lumière et les filtres chromatiques peuvent avoir, par exemple dix, si des bandes spectrales disjointes couvrent chacune une largeur de spectre de trente nanomètres et que les affiches-filtres possèdent un spectre d'absorption correspondant aux spectres d'émission possibles de la source de lumière.

On observe qu'il peut être effectué un fondu-enchaîné entre les messages portés par les affiches, en réduisant progressivement l'intensité lumineuse émise dans une bande spectrale et en augmentant progressivement l'intensité lumineuse émise dans une autre bande spectrale ou en commandant indépendamment les intensités lumineuses dans les différentes bandes spectrales d'émission.

On peut aussi réaliser des effets d'animation, par un séquencement des sources de lumières mises en oeuvres en regard des différentes parties des affiches.

Le même principe peut être mis en oeuvre dans des jouets ou des articles de gadgeterie, par exemple des stylos avec une image animée en fonction de la ou des sources lumineuses qui sont allumées.

## Revendications

1. Clavier, **caractérisé en ce qu'**il comporte :
- au moins une touche comportant, chacune :
○ au moins deux filtres superposés (612 à 614 et 622 à 624), chaque filtre correspondant à une valeur de caractéristique physique de la lumière et à un message à afficher sur ladite touche, chaque filtre étant constitué d'un support transparent ou translucide sur lequel le message est imprimé avec une encre de couleur , et une partie transparente ayant un coefficient de transparence inférieur à 100%, et
○ un contacteur (616, 626) adapté à fournir un signal représentatif de l'interaction entre un utilisateur et ladite touche,
- une source de lumière (630) adaptée à éclairer, par rétro-éclairage, les filtres superposés d'au moins une touche,
- un moyen de modulation (640) d'au moins une caractéristique physique de ladite source de lumière adapté à moduler au moins une valeur de caractéristique physique de la lumière émise par la source de lumière de manière à rendre visible un message porté par un dit filtre d'au moins une touche et
- un moyen de réception (850) de signaux issus de chaque dit contacteur, comprenant un moyen de commutation (855), ledit moyen de réception étant adapté à affecter des messages différents auxdits signaux, selon la commutation effectuée par le moyen de commutation (855), ledit moyen de commutation (855) étant par ailleurs adapté a provoquer, en commandant ledit moyen de modulation (840), le changement de messages affichés sur le clavier.

2. Clavier selon la revendication 1, **caractérisé en ce que** la source de lumière (630) est adaptée à éclairer conjointement, par rétro-éclairage, une pluralité de touches et leurs filtres superposés, le moyen de modulation (640) d'au moins une caractéristique physique de ladite source de lumière étant adapté à moduler au moins une valeur de caractéristique physique de la lumière émise par la source de lumière et reçue par une pluralité de touches, de manière à rendre visibles des messages portés par un dit filtre de chaque dite touche.

3. Clavier selon l'une quelconque des revendications 1 à 2, **caractérisé en ce que** chaque filtre possède des zones transparentes ayant un coefficient de transparence inférieur à 100% et des zones dont les spectres d'absorption correspondent respectivement sensiblement aux spectres d'émission de la source de lumière pour les différentes valeurs de modulation du moyen de modulation.

4. Clavier selon l'une quelconque des revendications 1 à 3, **caractérisé en ce que** chaque touche comporte au moins trois filtres superposés, les filtres possédant des zones transparentes ayant un coefficient de transparence inférieur à 100% et des zones dont les spectres d'absorption correspondent respectivement sensiblement aux spectres d'émission de la source de lumière pour au moins trois valeurs de modulation du moyen de modulation.

5. Clavier selon l'une quelconque des revendications 1 à 4, **caractérisé en ce que** le moyen de modulation (640) est adapté à faire varier la bande spectrale lumineuse qui parvient aux dits filtres (612 à 614 et 622 à 624) et les dits filtres présentent des bandes spectrales de transparences différentes.

6. Clavier selon l'une quelconque des revendications 1 à 5, **caractérisé en ce que** la source de lumière (630) comporte une diode électroluminescente dont la bande spectrale d'émission varie en fonction des caractéristiques électriques du signal d'alimentation qui lui est appliqué et le moyen de modulation est adapté à faire varier lesdites caractéristiques électriques.

7. Clavier selon l'une quelconque des revendications 1 à 6, **caractérisé en ce que** la source de lumière comporte au moins deux transducteurs électro-optiques (130, 132, 230, 232, 330, 332, 430, 432, 530, 532) indépendants placés en parallèle sur un chemin optique de rayons lumineux provenant de la source de lumière et parvenant à la touche, le moyen de modulation (140, 240, 340, 440, 540) étant adapté à commander alternativement l'émission de lumière par l'un ou l'autre des transducteurs électro-optiques.

8. Clavier selon l'une quelconque des revendications 1 à 7, **caractérisé en ce que** le moyen de modulation (240) est adapté à faire varier un axe de polarisation principal des rayons lumineux atteignant les filtres (212, 214, 222, 224) et les filtres présentent des transparences différentes selon les axes de polarisation.

9. Clavier selon l'une quelconque des revendications 1 à 8, **caractérisé en ce que** les filtres (412, 414, 416) comportent des composants adaptés à réaliser des interférences constructives ou destructives selon l'angle d'incidence des rayons lumineux et le moyen de modulation (440) est adapté à faire varier l'angle d'incidence des rayons lumineux émis par la source de lumière (430, 432).

10. Clavier selon l'une quelconque des revendications 1 à 9, **caractérisé en ce que** les filtres (712, 714, 722, 724) comportent des hologrammes et la source de lumière comporte au moins deux transducteurs électro-optiques (730 à 736) adaptés à éclairer lesdits hologrammes avec des angles d'incidence différents pour faire apparaître différents symboles ou messages sur la touche, le moyen de modulation étant adapté à faire varier l'angle d'incidence des rayons lumineux émis par la source de lumière.

11. Clavier selon l'une quelconque des revendications 1 à 10, **caractérisé en ce que** les filtres (412, 414, 416) comportent des composants adaptés à réaliser des réflexions totales ou partielles selon l'angle d'incidence des rayons lumineux et la source de lumière (430, 432) comporte au moins deux transducteurs électro-optiques adaptés à éclairer lesdits filtres avec des angles d'incidence différents pour faire apparaître différents symboles ou messages sur la touche, le moyen de modulation étant adapté à faire varier l'angle d'incidence des rayons lumineux émis par la source de lumière.

12. Clavier selon l'une quelconque des revendications 1 à 11, **caractérisé en ce que** les filtres (712, 714, 722, 724) comportent des composants adaptés à réaliser des transferts de lumière différentes selon l'angle d'incidence des rayons lumineux et la source de lumière comporte au moins deux transducteurs électro-optiques (730, 732, 734, 736) adaptés à éclairer lesdits filtres avec des angles d'incidence différents pour faire apparaître différents symboles ou messages sur la touche, le moyen de modulation étant adapté à faire varier l'angle d'incidence des rayons lumineux émis par la source de lumière.

13. Clavier selon l'une quelconque des revendications 1 à 12, **caractérisé en ce que** le chemin optique allant de la source de lumière à la touche comporte une fibre optique (734, 736).

14. Clavier selon l'une quelconque des revendications 1 à 13, **caractérisé en ce que** le chemin optique allant de la source de lumière à la touche comporte au moins un composant optique réflecteur.

15. Clavier selon l'une quelconque des revendications 1 à 14, **caractérisé en ce que**, pour au moins une touche, au moins deux desdits filtres sont constitués, chacun, d'un ensemble de filtres (1112, 1114, 1122, 1124, 1162, 1163, 1164, 1172, 1173, 1174), lesdits ensembles de filtres étant juxtaposés en alternance dans la touche.

16. Dispositif électronique choisi parmi un assistant numérique personnel, un organiseur, un téléphone, une console de jeu, un ordinateur portable, un terminal d'accès à internet, un distributeur automatique de billets, une montre, une télécommande, un baladeur, un système de positionnement et un récepteur de signaux audiovisuels, un équipement électronique, bureautique ou de loisir, un télécopieur, un photocopieur, un scanneur, un lecteur de supports enregistrés, une installation de domotique, un appareil électroménager, un équipement médical, un appareil de mesure, un automate d'analyse, un équipement automobile, un panneau d'indication, un interrupteur, un dispositif de jeu, un élément de décoration, une lampe et/ou un panneau d'affichage, **caractérisé en ce qu'**il comporte un clavier selon l'une quelconque des revendications 1 à 15.

17. Procédé d'affichage, **caractérisé en ce qu'**il comporte :
- une étape d'allumage d'une source de lumière adaptée à éclairer, par rétro-éclairage, au moins une touche comportant, chacune :
o au moins deux filtres superposés (612 à 614 et 622 à 624), chaque filtre correspondant à une valeur de caractéristique physique de la lumière et à un message à afficher sur ladite touche, chaque filtre étant constitué d'un support transparent ou translucide sur lequel le message est imprimé avec une encre de couleur, et une partie transparente ayant un coefficient de transparence inférieur à 100%, et
o un contacteur (616, 626) adapté à fournir un signal représentatif de l'interaction entre un utilisateur et ladite touche,
- une étape de commutation apte à commander ledit moyen de modulation (840),
- une étape de modulation pour moduler au moins une valeur de caractéristique physique de la lumière émise par la source de lumière de manière à rendre visible un message porté par un dit filtre de chaque touche et
- une étape de réception de signaux issus de chaque dit contacteur au cours de laquelle on affecte des messages différents auxdits signaux, selon l'état du moyen de commutation (840).

## Claims

1. Keyboard that comprises:
- at least one key, each of which comprises:
o at least two superposed filters (612 to 614 and 622 to 624), each of which corresponds to a value of the physical characteristic of the light and to a message to be displayed on said key, each filter being formed of a transparent or translucent support on which the message is printed with a color ink, and a transparent portion having a coefficient of transparency below 100%, and
o a contactor (616, 626) adapted to supply a signal representative of the interaction between a user and the said key,
- a light source (630) adapted to light up, by backlighting, the superposed filters of at least one key,
- a modulation means (640) that modulates at least one physical characteristic of said light source, adapted to modulate at least one value of the physical characteristics of the light emitted by the light source; in order to make visible a message placed on said filter of at least one key and
- a reception means (850) that receives signals coming from each said contactor, comprising a switching means (855), said reception means being adapted to assign different symbols to said signals, in line with the switching carried out by the switching means (855), said switching means (855) being further adapted to cause, by controlling said modulation means (840), the change of messages displayed on the keyboard.

2. Keyboard according to claim 1, wherein the light source (630) is adapted to light up jointly, by backlighting, a plurality of keys and their superposed filters, the modulation means (640) of at least one physical characteristic of said light source being adapted to modulate at least one value of the physical characteristics of the light emitted by the light source and received by a plurality of keys, in order to jointly make visible the messages placed on a said filter of each said key.

3. Keyboard according to any of claim 1 to 2, wherein each filter has transparent areas having a coefficient of transparency below 100%, and areas with absorption spectra respectively corresponding noticeably to the emission spectra of the light source, for the different modulation values of the modulation means.

4. Keyboard according to any of claim 1 to 3, wherein each key comprises at least three superposed filters, the filters having transparent areas with a coefficient of transparency below 100% and areas with absorption spectra respectively corresponding noticeably to the emission spectra of the light source, for at least three modulation values of the modulation means.

5. Keyboard according to any of claim 1 to 4, wherein the modulation means (640) is adapted to modify the spectral band of light reaching said filters (612 to 614 and 622 to 624) and said filters provide spectral bands of different transparency.

6. Keyboard according to any of claim 1 to 5, wherein the light source (630) comprises a light-emitting diode whose spectral band of emission varies according to the electrical characteristics of the power signal that is applied to it and the modulation means is adapted to modify said electrical characteristics.

7. Keyboard according to any of claim 1 to 6, wherein the light source comprises at least two independent electro-optical transducers (130, 132, 230, 232, 330, 332, 430, 432, 530, 532) placed in parallel on an optical path of light rays coming from the light source and going to the key, the modulation means (140, 240, 340, 440, 540) being adapted to control alternately the light emission by one or the other of the electro-optical transducers.

8. Keyboard according to any of claim 1 to 7, wherein the modulation means (240) is adapted to modify a principal axis of polarization of the light rays reaching the filters (212, 214, 222, 224) and the filters present different transparencies according to the axes of polarization.

9. Keyboard according to any of claim 1 to 8, wherein the filters (412, 414, 416) comprise components adapted to producing constructive or destructive interferences depending on the angle of incidence of the light rays and the modulation means (440) is adapted to modify the angle of incidence of the light rays emitted by the light source (430, 432).

10. Keyboard according to any of claim 1 to 9, wherein the filters (712, 714, 722, 724) comprise holograms and the light source comprises at least two electro-optical transducers (730 à 736) adapted to light up said holograms with different angles of incidence in order to make different symbols or messages appear on the key, the modulation means being adapted to modify the angle of incidence of the light rays emitted by the light source.

11. Keyboard according to any of claim 1 to 10, wherein the filters (412, 414, 416) comprise components adapted to produce total or partial reflections depending on the angle of incidence of the light rays and the light source (430, 432) comprises at least two electro-optical transducers adapted to light up said filters with different angles of incidence in order to make different symbols or messages appear on the key, the modulation means being adapted to modify the angle of incidence of the light rays emitted by the light source.

12. Keyboard according to any of claim 1 to 11, wherein the filters (712, 714, 722, 724) comprise components adapted to realize different light transfers depending on the angle of incidence of the light rays and the light source comprises at least two electro-optical transducers (730, 732, 734, 736) adapted to light up said filters with different angles of incidence in order to make different symbols or messages appear on the key, the modulation means being adapted to modify the angle of incidence of the light rays emitted by the light source.

13. Keyboard according to any of claim 1 to 12, wherein the optical path going from the light source to the key comprises at least one optical fiber (734, 736).

14. Keyboard according to any of claim 1 to 13, wherein the optical path going from the light source to the key comprises at least one optical reflector element.

15. Keyboard according to any of claim 1 to 14, wherein at least two of said filters, for at least one key, are made up of an assembly of filters (1112, 1114, 1122, 1124, 1162, 1163, 1164, 1172, 1173, 1174), said filter assemblies being juxtaposed alternately in the key.

16. Electronic device chosen between a personal digital assistant, an organizer, a telephone, a games console, a portable computer, an Internet access terminal, an Automatic Teller Machine, a watch, a remote control, a portable music player, a positioning system and an audiovisual signal receiver, an office or leisure or electronic equipment, a facsimile machine, a photocopier, a scanner, a recorded media reader, a home system installation, a household appliance, a medical equipment, a measurement device, an automated analysis device, automobile equipment, a signboard, a switch, a games system, a decorative element, a lamp and/or a display panel, **characterized in that** it comprises a key, according to any of claim 1 to 15.

17. Display method comprising:
- a step of switching a light source adapted to light up, by backlighting, at least one key comprising each:
o at least two superposed filters (612 to 614 and 622 to 624), each filter corresponding to a value of the physical characteristic of the light and to a message to be displayed on said key, each filter being formed of a transparent or translucent support on which the message is printed with a color ink, and a transparent portion having a coefficient of transparency below 100%, and
o a contactor (616, 626) adapted to deliver a signal representative of the interaction between the user and said key,
- a step of switching adapted to control said modulation means (840),
- a step of modulating at least one value of the physical characteristics of the light emitted by the light source, in order to jointly make visible a message placed on a said filter of each key and
- a step of receiving signals coming from each of said contactors, during which different symbols are assigned to said signals, depending on the state of the switching means (840).

## Patentansprüche

1. Tastatur, mit :
- mindestens einer Taste mit :
o mindestens zwei sich überlagernden Filtern (612 bis 614 und 622 bis 624), jeder Filter entspricht einem Wert der physischen Eigenschaften des Lichts und einer auf der Taste anzuzeigenden Nachricht, jeder Filter ist aus einem transparenten oder transluziden Träger gemacht, auf dem die Nachricht in Farbtinte aufgedruckt ist, und einem transparenten Teil, der einen Transparenzkoeffizienten von weniger als 100% hat, und
o einem Kontaktgeber (616, 626), dazu geeignet ein repräsentatives Signal der Interaktion zwischen Benutzer und besagter Taste zu liefern,
- einer Lichtquelle (630), dazu geeignet durch Backlighting die sich überlagernden Filter von mindestens einer Taste zu beleuchten,
- einem Modulationsmittel (640) mit mindestens einer der physischen Eigenschaften der besagten Lichtquelle, dazu geeignet mindestens einen Wert der physischen Eigenschaften des von der Lichtquelle ausgehenden Lichts so zu verändern dass eine Nachricht auf einem besagten Filter von mindestens einer Taste sichtbar wird, und
- einem Empfangsmittel (850) für Signale, die von jedem besagten Kontaktgeber ausgehen, mit einem Schaltmittel (855), das besagte Empfangsmittel ist dazu geeignet, den besagten Signalen verschiedene Nachrichten zuzuweisen, je nach ausgeführter Schaltung durch das Schaltmittel (855), das besagte Schaltmittel (855) ist ausserdem dazu geeignet, durch Steuerung des besagten Modulationsmittels (840) eine Veränderung der angezeigten Nachrichten auf der Tastatur zu erwirken.

2. Tastatur nach Anspruch 1, **dadurch gekennzeichnet dass** die Lichtquelle (630) dazu geeignet ist, durch Backlighting zusammen eine Mehrzahl an Tasten und ihre sich überlagernden Filter zu beleuchten, das Modulationsmittel (640) von mindestens einer physischen Eigenschaft der besagten Lichtquelle ist dazu geeignet mindestens einen Wert der physischen Eigentschaft des von der Lichtquelle ausgehenden und von einer Mehrzahl der Tasten empfangenen Lichts so zu verändern, dass Nachrichten auf einem besagten Filter jeder besagten Taste sichtbar werden.

3. Tastatur nach einem der Ansprüche 1 bis 2, **dadurch gekennzeichnet dass** jeder Filter einen transparenten Bereich mit einem Transparenzkoeffizienten von weniger als 100% aufweist und Bereiche mit Absorptionspektren, die jeweils deutlich den Emissionsspektren der Lichtquelle für die verschiedenen Modulationswerte des Modulationsmittels entsprechen.

4. Tastatur nach einem der Ansprüche 1 bis 3, **dadurch gekennzeichnet dass** jede Taste mindestens drei sich überlagernde Filter aufweist, die Filter haben transparente Bereiche mit einem Transparenzkoeffizienten von weniger als 100% und Bereiche deren Absorptionsspektren jeweils deutlich den Emissionsspektren der Lichtquelle für mindestens drei Modulationswerte des Modulationsmittels entsprechen.

5. Tastatur nach einem der Ansprüche 1 bis 4, **dadurch gekennzeichnet dass** das Modulationsmittel (640) dazu geeignet ist, das die Filter (612 bis 614 und 622 bis 624) erreichende Lichtspektralband zu verändern, und die besagten Filter weisen Spektralbänder von verschiedener Transparenz auf.

6. Tastatur nach einem der Ansprüche 1 bis 5, **dadurch gekennzeichnet dass** die Lichtquelle (630) eine Elektrolumineszenzdiode umfasst deren Emissionsspektralband sich verändert, je nach elektrischer Eigenschaften des ihm zugewiesenen Leistungssignals und das Modulationsmittel ist dazu geeignet, die besagten elektrischen Eigenschaften zu verändern.

7. Tastatur nach einem der Ansprüche 1 bis 6, **dadurch gekennzeichnet dass** die Lichtquelle mindestens zwei optoelektronische Messwandler umfasst (130, 132, 230, 232, 330, 332, 430, 432, 530, 532), die unabhängig und parallel auf einem optischen Weg der Lichtstrahlen plaziert sind, die von der Lichtquelle ausgehen und den Tasten zukommen, das Modulationsmittel (140, 240, 340, 440, 540) ist dazu geeignet, alternativ die Lichtausstrahlung durch den einen oder den anderen optoelektronischen Messwandler zu steuern.

8. Tastatur nach einem der Ansprüche 1 bis 7, **dadurch gekennzeichnet dass** das Modulationsmittel (240) dazu geeignet ist, eine Hauptpolarisierungsaxe der die Filter (212, 214, 222, 224) erreichenden Lichtstrahlen zu verändern, und die Filter weisen verschiedene Transparenzen auf, je nach Polarisierungsaxe.

9. Tastatur nach einem der Ansprüche 1 bis 8, **dadurch gekennzeichnet dass** die Filter (412, 414, 416) Elemente beinhalten, die dazu geeignet sind, konstruktive oder destruktive Interferenzen zu entwickeln, je nach Einfallswinkel der Lichtstrahlen und das Modulationsmittel (440) ist dazu geeignet, den Einfallswinkel der von der Lichtquelle (430, 432) ausgehenden Lichtstrahlen zu verändern.

10. Tastatur nach einem der Ansprüche 1 bis 9, **dadurch gekennzeichnet dass** die Filter (712, 714, 722, 724) Hologramme beinhalten und die Lichtquelle mindestens zwei optoelektronische Messwandler (730 bis 736) hat, dazu geeignet die besagten Hologramme mit verschiedenen Einfallswinkeln zu beleuchten, um verschiedene Symbole oder Nachrichten auf der Taste erscheinen zu lassen, das Modulationsmittel ist dazu geeignet, den Einfallswinkel der von der Lichtquelle ausgehenden Lichtstrahlen zu verändern.

11. Tastatur nach einem der Ansprüche 1 bis 10, **dadurch gekennzeichnet dass** die Filter (412, 414, 416) Elemente beinhalten, die dazu geeignet sind, totale oder teilweise Reflexionen zu bewirken, je nach Einfallswinkel der Lichtstrahlen, und die Lichtquelle (430, 432) beinhaltet mindestens zwei optoelektronische Messwandler, die dazu geeignet sind besagte Filter mit verschiedenen Einfallswinkeln zu beleuchten um verschiedene Symbole oder Nachrichten auf der Taste erscheinen zu lassen, das Modulationsmittel ist dazu geeignet, den Einfallswinkel der von der Lichtquelle ausgehenden Lichtstrahlen zu verändern.

12. Tastatur nach einem der Ansprüche 1 bis 11, **dadurch gekennzeichnet dass** die Filter (712, 714, 722, 724) Elemente beinhalten, die dazu geeignet sind verschiedene Lichttransferts zu bewirken, je nach Einfallswinkel der Lichtstrahlen und die Lichtquelle beinhaltet mindestens zwei optoelektroinsche Messwandler (730, 732, 734, 736) dazu geeignet, besagte Filter mit verschiedenen Einfallswinkeln zu beleuchten, um verschiedene Symbole und Nachrichten auf der Taste erscheinen zu lassen, das Modulationsmittel ist dazu geeignet, den Einfallswinkel der von der Lichtquelle ausgehenden Lichtstrahlen zu verändern.

13. Tastatur nach einem der Ansprüche 1 bis 12, **dadurch gekennzeichnet dass** der optische Weg, der von der Lichtquelle sur Taste geht, eine Glasfaser (734, 736) beinhaltet.

14. Tastatur nach einem der Ansprüche 1 bis 13, **dadurch gekennzeichnet dass** der optische Weg von der Lichtquelle zur Taste mindestens ein optisch reflexierendes Element beinhaltet.

15. Tastatur nach einem der Ansprüche 1 bis 14, **dadurch gekennzeichnet dass** für mindestens eine Taste mindestens zwei der besagten Filter jeweils aus einer Kombination von Filtern (1112, 1114, 1122, 1124, 1162, 1163, 1164, 1172, 1173, 1174) bestehen, die besagten Filterkombinationen liegen in der Taste abwechselnd nebeneinander.

16. Elektronische Vorrichtung beliebig wählbar zwischen einem Persönlichen Digitalen Assistenten, einem elektronischen Organisator, einem Telefon, einer Spielkonsole, einem Laptop, einem Internetzugangsterminal, einem Geldautomaten, einer Uhr, einer Fernbedienung, einem tragbaren Musikplayer, einem Ortungssystem und einem audiovisuellen Signalempfänger, einem Elektro-, Büro- oder Freizeitgerät, einem Faxgerät, einem Kopierer, einem Scanner, einem Mediaplayer, einer Home-Automation-Einrichtung, einem Haushaltsgerät, einem medizinischen Gerät, einem Messgerät, einem Analysegerät, einem Automobilzuberhörteil, einem Hinweisschild, einem Schalter, einem Spielgerät, einem dekorativen Element, einer Lampe und/oder einem Display, **dadurch gekennzeichnet dass** eine Tastatur nach einem der Ansprüche 1 bis 15 in ihr beinhaltet ist.

17. Anzeigevorrichtung, mit :
- einer Einschaltphase einer Lichtquelle, dazu geeignet durch Backlighting mindestens eine Taste zu beleuchten, mit jeweils :
o mindestens zwei sich überlagernden Filtern (612 à 614 et 622 à 624), jeder Filter entspricht einem Wert der physischen Eigenschaften des Lichts und einer auf der Taste anzuzeigenden Nachricht, jeder Filter ist aus einem transparenten oder transluziden Träger gemacht, auf dem die Nachricht in Farbtinte aufgedruckt ist, und ein transparenter Bereich hat einen Transparenzkoeffizienten von weniger als 100%, und
o einem Kontaktgeber (616, 626), dazu geeignet ein repräsentatives Signal der Internaktion zwischen Benutzer und der besagten Taste zu liefern,
- einer Schaltphase, die fähig ist, das besagte Modulationsmittel (840) zu steuern,
- einer Modulationsphase, um mindestens eine Eigenschaft der physischen Eigenschaften des von der Lichtquelle ausgehenden Lichts so zu verändern, dass eine Nachricht auf einem besagten Filter jeder Taste sichtbar gemacht wird, und
- einer Empfangsphase von Signalen, die von jedem besagten Kontaktgeber ausgehen, während derer Nachrichten den verschiedenen Signalen zugeordnet werden, je nach Zustand des Schaltmittels (840).
